# EUROPEAN PATENT APPLICATION

(11) **EP 1 762 581 A1**
(43) Date of publication of application: **14.03.2007**
(21) Application number: 06120451.7
(22) Date of filing: 11.09.2006
(51) Int. Cl.: C08G 18/67, C09D 175/16, C08L 75/16, C08L 63/04, C08L 67/07

(54) **Curable resin composition, lining material and tube-shaped lining material**

(30) Priority: 13.09.2005 JP 2005264604; 13.09.2005 JP 2005264616
(71) Applicant: Yoshika Corporation, Shinjuku-ku Tokyo 160-0004 (JP)
(72) Inventor: Ohoka, Shinkichi c/o Toa Grout, Inc., Tokyo 160-0004 (JP); Chou, Manryou c/o Toa Grout, Inc., Tokyo 160-0004 (JP)
(74) Representative: Staudt, Hans-Peter

(57) **Abstract**

A curable resin composition of the invention is excellent in odor property, resistance to water, chemical resistance, durability and adhesive property. A curable resin composition comprising (A) urethane-modified epoxy (meth)acrylate having (meth)acryloyl group(s) obtained by the reaction of an OH-containing hydroxy vinyl ester compound derived from aromatic epoxy resin and (meth)acrylic acid with an aliphatic and/or cycloaliphatic diisocyanate compound, or unsaturated polyester having number average molecular weight of 500 to 4,000; and (B) monofunctional (meth)acrylate monomer containing as alcohol residue cyclic hydrocarbon group(s) having one carbon-carbon double bond or one nitrogen atom in the cycle.

## Description

### Background of the Invention

### 1. Field of the Invention

The present invention relates to a photo or thermal curable resin composition useful in a lining material, particularly a tube-shaped lining material for rebirth of inner surfaces of a tube-shaped moldings, a rectangular pipe and a manhole in a sewer disposal facility, and useful as a corrosion-resistant lining material for a concrete facility in a food factory, a drug factory and a factory relating to electronic materials, the curable resin composition having low odor property, high photo- or heat-polymerizable property, excellent chemical resistance, good adhesion properties and excellent heat water resistance; and a lining material and tube-shaped lining material comprising the curable composition.

### 2. Description of the Related Art

A lining material is, for example, used for rebirth of inner surfaces of a tube-shaped moldings, a rectangular pipe and a manhole in a sewer disposal facility, and used as a corrosion-resistant lining material for concrete facilities in a food factory, a drug factory and a factory relating to electronic materials.

As a curable resin composition used in the lining material, an unsaturated polyester resin composition has been used for a long time period. Recently, a curable resin composition (generally referred to as vinyl ester resin composition) comprising epoxy (meth)acrylate obtained by reacting aromatic epoxy resin with unsaturated monobasic acid, especially acrylic acid or methacrylic acid is increasingly used.

In the unsaturated polyester resin composition and vinyl ester resin composition, styrene is generally used as a copolymerizable monomer. However, a mixture of the ester resin and styrene emits a characteristic odor, and therefore it is necessary to control severely air ventilation if the mixture is used in an atmosphere of lining an inner surface of a sewer pipe for rebirth of a existing pipe line or of lining a inner surface of a narrow underground concrete structure. As the disposal measure, for example, a method of absorbing the emitted styrene into activated carbon absorption equipment has been adopted. Further styrene is needed to control the emitted amount and to comply with publication system of the traveled amount according to setting of designated value of room concentration relating to sick building problem and designation as the first kind designated chemical substances of PRTR system (Pollution Release and Transfer Register). In addition, the control of styrene concentration in the unsaturated polyester resin composition and vinyl ester resin composition becomes all the more sever.

A resin composition having low odor is describe in a large number of publications, for example, JP06-211952A, JP08-283357A, JP09-157337A, JP11-12448A, JP10-231453A, JP11-255847A, JP2001-24063 2A and JP2002-60282A, which disclose technology relating to low odor. The publications recite compositions comprising epoxy (meth)acrylate and various low-odor (meth)acrylate monomers.

Further, in order to repair the existing pipe line, a tube-shaped lining material using a heat curable (thermosetting) resin such as the unsaturated polyester resin composition and vinyl ester resin composition mentioned above are widely used. In more detail, a tube-shaped lining material comprising a tube-shaped fabric layer having its inner surface impregnated with a styrene system unsaturated polyester liquid resin, styrene system vinyl ester resin or epoxy resin is used for the purpose of reinforcement treatment, anticorrosion treatment, leakage water countermeasure, water seepage countermeasure or flow-rate improvement of pipe lines such as a gas pipe line, a water pipe line, a manhole of sewer facility and a sewer pipe line. The tube-shaped lining material is inverted by means of fluid pressure in the existing pipe line and pressed forward, and the inverted tube-shaped lining material is covered and pressure bonded on the inner surface of the existing pipe line by the fluid pressure, and then the unsaturated polyester liquid resin and the vinyl ester resin of the lining material is cured by heating or light irradiation. The epoxy resin is generally cured by heating to form a reinforcing plastic tube.

A tube-shaped lining material comprising a photocurable resin composition, which is capable of curing by light irradiation, is disclosed in, for example, JP50-59497A, JP60-8047C, JP01-92214A, JP02-188227A, JP11-210981A and JP2003-33970A. JP2003-33970A describes a photocurable material comprising unsaturated polyester and/or vinyl ester resin (epoxy resin) and bisacylphosphine oxide.

The tube-shaped lining material comprising epoxy resin (vinyl ester resin) containing (meth)acrylate monomers as mentioned above is generally used according to a process of curing the material by pressing heat source such as heated air, heated water or heated steam into an existing pipe line. The vinyl ester resin containing (meth)acrylate monomers is inferior to the styrene system unsaturated polyester or vinyl ester in curing rate, and therefore has disadvantage of requiring a long time period for sufficient curing for flow examination. However, in case the tube-shaped lining material using the styrene system unsaturated polyester or vinyl ester is usually cured by heating using an organic peroxide or by light irradiation, styrene emitted when, after the inverting of the material, a film of the inner side of the pipe line is peeled from and taken out the cured polyester or vinyl ester, brings about air pollution by leak of the styrene from the pipe line or manhole, because the styrene of polymerizable monomer has high odor and high vapor pressure and hence emits in large amounts. Further, the inner and outer tube of the tube-shaped lining material are made up of, for example, urethane elastomer, which is apt to swell, deteriorate or soften by contact with the styrene monomer contained in the styrene system unsaturated polyester or vinyl ester, and therefore the tube-shaped lining material after curing generates wrinkles on its inner surface. Thus, the tube is required to have performance, for example, no swelling, deterioration or softening soften by contact with styrene, and no melting or deterioration when the tube is subjected to rise in temperature by reaction heat generated in the curing of the curable resin or when the tube is in contact with hot air or hot water used as curing heat source for a long time period after the tube-shaped lining material is installed in the pipe line.

In order to resolve the above-mentioned problems, JP2001-177010A proposes a tube having at least double layered structure, in which a thickness of polyurethane film is increased by considering a thickness eroded by styrene monomer to give resistance to styrene, resistance to heat, and resistance to heat history during the curing. However, the publication does not propose a drastic solution because of the double layered structure. Further JP58-9317C, JP04-5020A and JP2000-14148A describe that the above problems are required to have the double layered structure.

Though the vinyl ester resin is generally used as resin for the tube-shaped lining material, the environmental pollution problems are not solved yet.

### Summary of the Invention

The first object of the present invention is to provide a curable resin composition in which the above-mentioned problems are solved and which is excellent in odor property, resistance to water, chemical resistance, durability and adhesive property.

Further the second object of the present invention is to provide a lining material using the curable resin composition and having the above-mentioned characteristics.

Furthermore the third object of the present invention is to provide a tube-shaped lining material using the curable resin composition and having the above-mentioned characteristics.

As a result of the inventors' further study with respect to the above-mentioned problems, the inventors have found that the problems are solved by the following inventions:
The present invention can be provided by a curable resin composition (I) comprising:
(A) urethane-modified epoxy (meth)acrylate having at least one (meth)acryloyl group obtained by the reaction of an OH-containing hydroxy vinyl ester (epoxy (meth)acrylate) compound derived from aromatic epoxy resin and (meth)acrylic acid with an aliphatic and/or cycloaliphatic diisocyanate compound, or
   unsaturated polyester having number average molecular weight of 500 to 4,000; and
(B) a monofunctional (meth)acrylate monomer containing as alcohol residue at least one cyclic hydrocarbon group having one carbon-carbon double bond or one nitrogen atom in the cycle.

The curable resin composition preferably further comprises (C) alkoxylated bisphenol A dimethacrylate having alkylene oxide addition molar number of 2 to 20.

Further the present invention can be provided by a curable resin composition (II) comprising:
(A) 20 to 60% by weight of urethane-modified epoxy (meth)acrylate having at least one (meth)acryloyl group obtained by the reaction of an OH-containing hydroxy vinyl ester compound derived from aromatic epoxy resin and (meth)acrylic acid with an aliphatic and/or cycloaliphatic diisocyanate compound;
(B) 20 to 40% by weight of a monofunctional (meth)acrylate monomer containing as alcohol residue at least one cyclic hydrocarbon group having one carbon-carbon double bond or one nitrogen atom in the cycle; and
(C) 20 to 40% by weight of alkoxylated bisphenol A dimethacrylate having alkylene oxide addition molar number of 2 to 20; the total percents of (A) to (C) being 100%.

Furthermore the present invention can be provided by a curable resin composition (III) comprising:
(A) 30 to 70% by weight of unsaturated polyester having number average molecular weight of 500 to 4,000; and
(B) 30 to 70% by weight of a monofunctional (meth)acrylate monomer containing as alcohol residue at least one cyclic hydrocarbon group having one carbon-carbon double bond or one nitrogen atom in the cycle; the total percents of (A) and (B) being 100%;
a curable resin composition (IV) comprising:
(A) 30 to 70% by weight of unsaturated polyester having number average molecular weight of 500 to 4,000;
(B) 30 to 70% by weight of a monofunctional (meth)acrylate monomer containing as alcohol residue at least one cyclic hydrocarbon group having one carbon-carbon double bond or one nitrogen atom in the cycle; and
(C) 5 to 20% by weight of alkoxylated bisphenol A dimethacrylate having alkylene oxide addition molar number of 2 to 20;
the total percents of (A) to (C) being 100%;
a curable resin composition (V) comprising:
(A) 30 to 70% by weight of unsaturated polyester having number average molecular weight of 500 to 4,000;
(B) 30 to 70% by weight of a monofunctional (meth)acrylate monomer containing as alcohol residue at least one cyclic hydrocarbon group having one carbon-carbon double bond or one nitrogen atom in the cycle; and
(D) 10 to 70% by weight of epoxy (meth)acrylate derived from aromatic epoxy resin and (meth)acrylic acid;
the total percents of (A), (B) and (D) being 100%; and
a curable resin composition (VI) comprising:
(A) 30 to 70% by weight of unsaturated polyester having number average molecular weight of 500 to 4,000;
(B) 30 to 70% by weight of a monofunctional (meth)acrylate monomer containing as alcohol residue at least one cyclic hydrocarbon group(s) having one carbon-carbon double bond or one nitrogen atom in the cycle;
(C) 5 to 20% by weight of alkoxylated bisphenol A dimethacrylate having alkylene oxide addition molar number of 2 to 20; and
(D) 10 to 70% by weight of epoxy (meth)acrylate derived from aromatic epoxy resin and (meth)acrylic acid;
the total percents of (A) to (D) being 100%.

In the invention, (meth)acrylate means acrylate and/or methacrylate, and same applies to (meth)acryloyl and (meth)acrylic acid.

The preferred embodiments of the invention are as follows:
(1) The urethane-modified epoxy (meth)acrylate (hereinafter may be referred to as urethane-modified vinyl ester) has a (meth)acryloyl group(s) as an end group of said urethane-modified epoxy (meth)acrylate. The existence of the (meth)acryloyl group enhances crosslink density to give excellent resistance to oxidization, durability, resistance to solvent and heat resistance to the urethane-modified epoxy (meth)acrylate.
(2) The diisocyanate compound is a cycloaliphatic diisocyanate compound, especially isophorone diisocyanate. The urethane-modified epoxy (meth)acrylate having excellent resistance to oxidization, durability, resistance to solvent and heat resistance can be easily obtained.
(3) The monofunctional (meth)acrylate monomer (B) has molecular weight of not less than of 240, viscosity of not more than 100mPa·s (at 25°C) and vapor pressure of not more than 0.5mmHg. Use of the monomer easily renders the odor less.
(4) The monofunctional (meth)acrylate monomer (B) has as the alcohol residue a group formed by bonding the cyclic hydrocarbon group with an oxyalkylene group. Use of the monomer enhances the curing property.
(5) The monofunctional (meth)acrylate monomer (B) is at least one monomer selected from dicyclopentenyloxyethyl acrylate, dicyclopentenyloxyethyl methacrylate, dicyclopentanyl methacrylate, dicyclopentanyl acrylate, dicyclopentenyl methacrylate, dicyclopentenyl acrylate, pentamethylpiperidyl acrylate and pentamethylpiperidyl methacrylate. Use of these compounds brings about excellent curability, and stability of bonding strength and of weight changing rate, in particular.
(6) Instead of a part of the component (B), at least one polyfunctional (meth)acrylate monomer selected from neopentylglycol dimethacrylate, trimethylolpropane trimethacrylate, ethylene glycol dimethacrylate, diethylene glycol dimethacrylate, 1,3-butyleneglycol dimethacrylate, 1,6-hexanediol dimethacrylate, 1,6-hexanediol diacrylate and neopentylglycol diacrylate is used. The compounds bring about excellent workability in the combination with the urethane-modified epoxy (meth)acrylate or unsaturated polyester resin, and excellent impregnation property to a fiber tube. The polyfunctional (meth)acrylate monomer preferably has viscosity of not more than 10mPa·s (at 25°C) in order to easily control the viscosity of the resin composition when the monomer is combined with the monofunctional (meth)acrylate monomer.
(7) The alkylene oxide of the component (C) is propylene oxide or ethylene oxide, especially ethylene oxide.

Furthermore, the present invention can be provided by a tube-shaped lining material comprising a tube-shaped curable composite comprising a tube-shaped fabric layer impregnated with a curable resin composition comprising the curable resin composition above and a photopolymerization initiator or thermopolymerization initiator (organic peroxide), and at least one tube-shaped film covering inner and/or outer surface(s) of the tube-shaped fabric layer. By adhering and curing the composition onto an inner surface of a pipe line, the above-mentioned problems can be solved.

Moreover, the present invention can be provided by a lining material comprising the curable resin composition that can be advantageously used in the tube-shaped lining material.

Further, the present invention can be provided by a lining material comprising 30 to 90% by weight of the curable resin composition (I) or (II) (preferably (II)) and 10 to 70% by weight of unsaturated polyester containing 0.5 to 10% by weight of a thickener. A tube-shaped lining material comprising a tube-shaped fabric layer impregnated with the lining material, and at least one tube-shaped film covering inner and/or outer surface(s) of the tube-shaped fabric layer is also useful.

Also, a lining material and a tube-shaped lining material comprising the curable resin composition (I) or (III) to (VI) (preferably (III) to (VI)), further containing 0.5 to 10% by weight of a thickener based on the total amount of the curable resin composition are preferred.

### (Effect of the Invention)

In the curable resin composition of the invention, the urethane-modified epoxy (meth)acrylate having (meth)acryloyl group(s) or the specific unsaturated polyester as the component (A), and the specified monofunctional (meth)acrylate monomer containing having high reactivity and low odor property are used, preferably in the specific component ratio. Therefore the component shows no volatilization of styrene, excellent drying and curing properties (by heating or light irradiation), and cast molding plate or laminate obtained from the composition displays excellent mechanical properties compared with the existing styrene system vinyl ester resin composition.

In case the urethane-modified epoxy (meth)acrylate as the component (A) is used, the composition preferably comprises the alkoxylated bisphenol A (C).

The lining material of the invention suitable for the tube-shaped lining material does not bring about occurrence of styrene before and after the curing, and therefore does not pollute ambient environment. Further even if the tube-shaped fabric layer (fabric tube) impregnated with the resin composition has only one layer formed on each of the inner and outer surface of the fabric tube, the fabric tube does not suffer from swelling, deterioration and softening to generate wrinkles on its inner surface. Furthermore, because of excellent curing properties by heating or light irradiation, it is not needed to use two fabric tubes unlike in conventional case.

### Brief Description of the Drawings

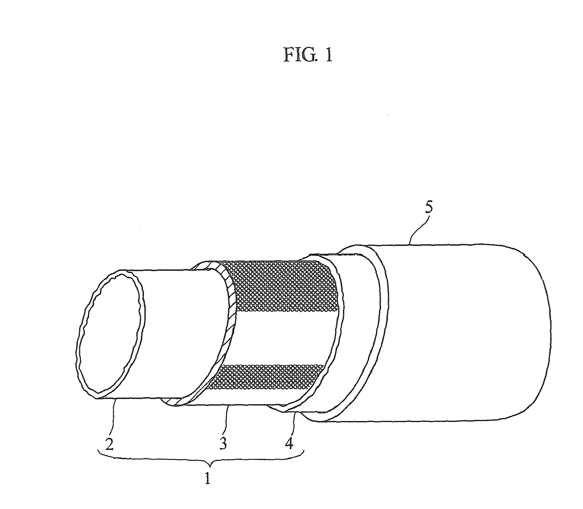

Fig. 1 is a section view illustrating an example of the structure of the tube-shaped lining material of the present invention.

### Detailed Description of the Invention

The curable resin composition (I) of the present invention uses as the component (A), urethane-modified epoxy (meth)acrylate having (meth)acryloyl group(s), or unsaturated polyester having number average molecular weight of 500 to 4,000.

The urethane-modified epoxy (meth)acrylate having (meth)acryloyl group(s) can be obtained by the reaction of an OH-containing hydroxy vinyl ester (epoxy (meth)acrylate) compound derived from aromatic epoxy resin and (meth)acrylic acid as unsaturated monobasic acid with an aliphatic and/or cycloaliphatic diisocyanate compound.

Examples of the aromatic epoxy resin (i.e., epoxy resin having aromatic rings in its molecule), which is one component for preparing the urethane-modified epoxy (meth)acrylate, include novolac system epoxy resins such as phenol novolac system epoxy resin, cresol novolac system epoxy resin and alkyl phenol system epoxy resin; bisphenol system epoxy resins such as bisphenol A series epoxy resin, bisphenol F series epoxy resin and bisphenol S series epoxy resin; resorcin system epoxy resin; N-glycidylamine system epoxy resin; and brominated bisphenol A series epoxy resin.

The epoxy resins can be used singly or in two or more kinds. Between the epoxy resins, the bisphenol A series epoxy resin is preferred because it brings about good balance between a cured lining material (e.g., tube-shaped lining material) and a cured concrete covering material.

The OH-containing hydroxy epoxy (meth)acrylate (vinyl ester) compound, which is one component for preparing the urethane-modified epoxy (meth)acrylate of the component (A), can be obtained by a conventional reaction of the above aromatic epoxy resin with (meth)acrylic acid.

The unsaturated monobasic acid reacting with the epoxy resin is acrylic acid and/or methacrylic acid. The other monomers such as crotonic acid, sorbitan acid, cinnamic acid, acrylic acid dimmer, monomethyl maleate, monomethyl fumarate, monocyclohexyl fumarate, and sorbic acid can be used in small amounts together with acrylic acid or methacrylic acid. The other monomers can be used singly or in two or more kinds. In the photocurable resin composition, acrylic acid is generally used in view of polymerization rate.

In the reaction of the aromatic epoxy resin and (meth)acrylic acid, the molar ratio of the former and the latter is generally in the range of 1 : 0.6 to 1.4, especially 1 : 0.8 to 1.2. The reaction is generally carried out at temperature of 80 to 130°C. Examples of esterification catalysts include tertiary amines such as triethyl amine and dimethyl aniline, quaternary ammonium salts such as trimethylbenzyl ammonium chloride, triethylbenzyl ammonium chloride and pyridinium chloride, and inorganic salts such as lithium hydroxide and lithium chloride. If necessary, polymerization inhibitors can be employed. Examples of the polymerization inhibitors include hydroquinones such as hydroquinone and methylhydroquinone, benzoquinones such as benzoquinone and methyl-p-benzoquinone, catecols such as t-butylcatecol, phenols such as 2,6-di-t-butyl-4-mcthylphenole and 4-methoxyphenole, and phenothiazine.

The urethane-modified epoxy (meth) acrylate can be obtained by reacting an OH group of the hydroxy vinyl ester (epoxy (meth)acrylate) compound with an aliphatic and/or cycloaliphatic diisocyanate compound. Hydroxyl number of the hydroxy vinyl ester compound is generally in the range of 150 to 300mgKOH/g, preferably 200 to 250mgKOH/g. The reaction is preferably carried out at NCO/OH equivalent ratio of 0.01 to 0.90, especially 0.20 to 0.70. Temperature of the reaction is generally in the range of 50 to 100°C, especially 60 to 90°C.

Examples of the aliphatic and/or cycloaliphatic diisocyanate compounds include isophorone diisocyanate, 1,6-hexane diisocyanate, 1,10-decamethylene diisocyanate, 1,4-cyclohexylene diisocyanate, hydrogenated tolylene diisocyanate, hydrogenated diphenylmethane diisocyanate. In contrast, when urethane-modified epoxy (meth) acrylate prepared by using aromatic diisocyanates such as tolylene diisocyanate and diphenylmethane diisocyanate is used as one of the resin composition, the resultant cured product is lack in resistance to yellowing during or after the curing or across the ages, bonding strength, resistance to hot water (at raised temperature) and alkali resistance. A photopolymerizable resin composition obtained by mixing the urethane-modified epoxy (meth) acrylate using tolylene diisocyanate with a photopolymerization initiator shows relatively low photopolymerization rate, and therefore it is not preferred to apply the composition to a rebirth process of a lining of pipe line that requires rapid curing treatment. Hence, use of the aliphatic and/or cycloaliphatic diisocyanate compounds brings about good results compared with use of the aromatic diisocyanate. Particularly, the isophorone diisocyanate of the aliphatic diisocyanate has a tertiary carbon atom and a methylene group in the vicinity of a nitrogen atom of an NCO group, and therefore the resultant urethane-modified epoxy (meth) acrylate show high photopolymerization rate, and can be completely cured even by irradiation of a small amount of active light, and particularly can be completely cured even in the surface of the lining material without cut-off of air. Thus, in case the resin composition is used as a tube-shaped lining material and air is commingled with the composition whereby air remains in the interface between a cover film of the composition and a prepreg, curing of the composition at the interface is not inhibited.

The urethane-modified epoxy (meth)acrylate as the component (A) is generally used in the range of 30 to 60% by weight based on the total amount of the components (A), (B) and (C).

As the component (A), the unsaturated polyester having number average molecular weight of 500 to 4,000 can be used instead of the urethane-modified epoxy (meth)acrylate. Both of the unsaturated polyester and the urethane-modified epoxy (meth)acrylate can be employed. Further the urethane-modified epoxy (meth)acrylate can be employed together with any known unsaturated polyester.

The unsaturated polyester as the component (A), any known unsaturated polyester can be used so long as it has number average molecular weight of 500 to 4,000. The unsaturated polyester is generally prepared by esterification reaction of α,β-unsaturated carboxylic acid and polyhydric alcohol and subsequent deglycolization reaction (glycol-removing reaction). In addition to α,β-unsaturated carboxylic acid, saturated carboxylic acid can be used.

Usually, one-step reaction is carried out in case of use of an ortho compound, and two-step reaction is carried out in case of use of an iso compound. In case of use of an tere compound, it is possible that an interesterification reaction is carried out and then an esterification reaction is done. The esterification reaction is generally conducted at temperature of 190 to 220°C.

Temperature to obtain a high reactive polyester is preferably not more than 200°C. The esterification reaction can be generally carried out according to conventional procedures under the introduction of nitrogen. The molecular weight distribution (weight average molecular weight (M_{w})/number average molecular weight (Mₙ)) is preferably not more than 4. The molecular weight distribution of more than 4 brings about increased initial viscosity to reduce impregnation property into a tube-shaped fiber even if the composition is used together with a thickener as an additive. The molecular weight distribution is more preferably not more than 3.5.

The deglycolization reaction is carried out by addition of a catalyst after the esterification reaction proceeds to an acid value of not more than 70KOHmg/g, preferably not more than 40KOHmg/g. The deglycolization reaction is preferably carried out in the presence of the catalyst at temperature of 180 to 220°C and pressure of not more than 5Torr for 2 to 16 hours. The resultant unsaturated polyester preferably has hydroxyl number of 10 to 200KOHmg/g, especially 15 to 170KOHmg/g. The number average molecular weight (Mₙ) is generally determined according to (2×56.1×1,000)/(Acid value + Hydroxyl number).

Examples of the α,β-unsaturated carboxylic acid include fumaric acid, maleic acid, maleic anhydride, itaconic acid, citraconic acid, mesa-conic acid, chloromaleic acid, or dimethyl ester thereof. The α,β-unsaturated carboxylic acid can be used singly or in two or more kinds. Examples of the saturated carboxylic acid include phthalic acid, phthalic anhydride, isophthalic acid, terephthalic acid, chlorendic acid, hexahydrophthalic anhydride, tetrahydrophthalic anhydride, adipic acid, sebacic acid, which can be used in addition to the α,β-unsaturated carboxylic acid. The saturated carboxylic acid can be used singly or in two or more kinds.

Examples of the polyhydric alcohol include diols such as ethylene glycol, diethylene glycol, propylene glycol, dipropylene glycol, trimethylene glycol, 1,3-butanediol, 1,4-butanediol, 2-methyl-1,3-propanediol, 1,6-hexanediol, cyclohexanediol, neopentyl glycol, 2,2,4-trimethyl-1,3-pentancdiol, 1,4-cyclohexane dimethanol, hydrogenated bisphenol A, and alkylene oxide adduct of hydrogenated bisphenol A; triols such as trimethylolpropane; tetraols such as pentaerythritol. The polyhydric alcohol can be used singly or in two or more kinds.

Dicylopentadiene system unsaturated polyester obtained by reaction of α,β-unsaturated carboxylic acid, unsaturated carboxylic acid and polyhydric alcohol together with dicyclopentadiene, can be employed in the invention.

Further, PET (polyethylene terephthalate) system unsaturated polyester obtained by the reaction between a glycol decomposed product (as main component) obtained by reacting of recycled PET with polyhydric alcohol at high temperature, and α,β-unsaturated carboxylic acid, and polyhydric alcohol, can be employed as the unsaturated polyester of the invention.

The unsaturated polyester of the invention has number average molecular weight of 500 to 4,000, preferably 2,000 to 3,500, especially 2,300 to 3,200. When the number average molecular weight is more than 4,000, the composition is reduced in thickening rate and curing rate and the polyester itself has high viscosity. When the number average molecular weight is less than 500, the composition is extremely increased in thickening rate due to existence of unreacted monomer in the unsaturated polyester. Particularly, when the composition is used in the tube-shaped lining material, the tube-shaped fiber is not sufficiently impregnated with the composition. Use of the unsaturated polyester having the preferred number average molecular weight range brings about the composition having excellent curing property, drying property and mechanical characteristics.

The unsaturated polyester as the component (A) is generally used in the range of 30 to 70% by weight (35 to 65% by weight) based on the total amount of the components (A) and (B).

The resin composition of the invention contains the monofunctional (meth)acrylate monomer as the component (B) having as alcohol residue cyclic hydrocarbon group(s) having one carbon-carbon double bond or one nitrogen atom in the cycle. The monofunctional (meth)acrylate monomer generally has molecular weight of not less than of 200, especially 240, viscosity of not more than 100mPa·s (at 25°C) and vapor pressure of not more than 0.5mmHg. Therefore the monofunctional (meth)acrylate monomer has low volatility and scarcely brings about environmental pollution. Further the monofunctional (meth)acrylate monomer preferably has as the alcohol residue a group formed by bonding the cyclic hydrocarbon group with an oxyalkylene group.

Preferred examples of the monofunctional (meth)acrylate monomer include: 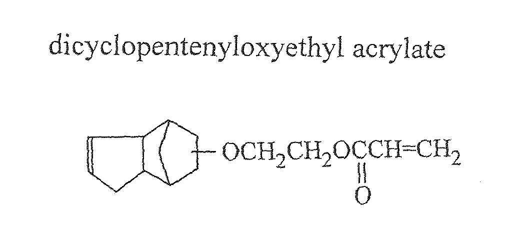 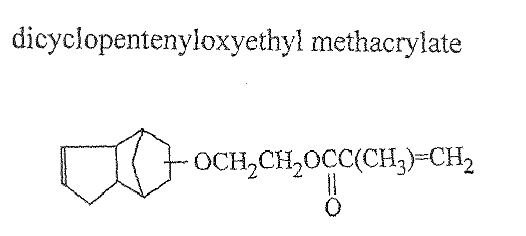 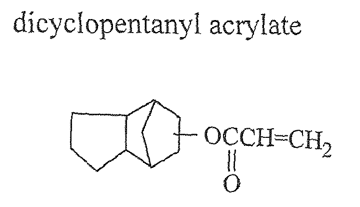 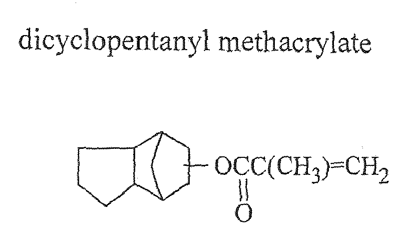 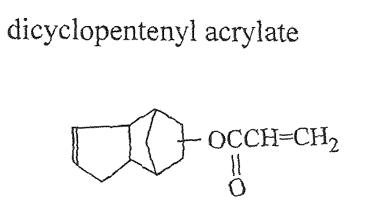 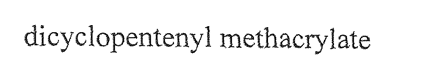 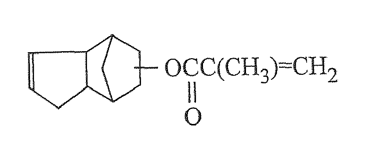 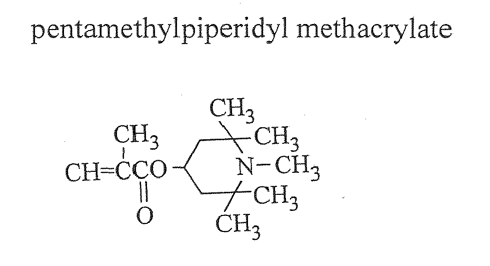 and

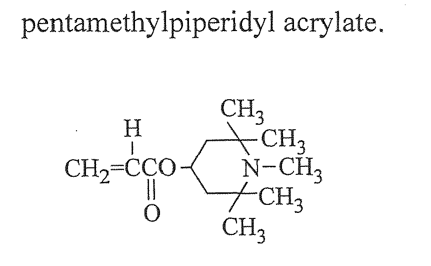

The monomer can be used singly or in two or more kinds.

Of the above-mentioned monofunctional (meth)acrylate monomers, dicyclopentenyloxyethyl acrylate and dicyclopentenyloxyethyl methacrylate are preferred in view of odor property, curing property and characteristics of the resultant cured product. In case the tube-shaped lining material is cured by light irradiation, the dicyclopentenyloxyethyl acrylate having a terminal acryloyl group is suitable because the curing rate is high compared with a terminal methacryloyl group. However, both can be also employed.

Instead of a part of the component (B), a polyfunctional (meth)acrylate monomer can be employed if necessary. Examples of the polyfunctional (meth)acrylate monomers include neopentylglycol dimethacrylate, trimethylolpropane trimethacrylate, ethylene glycol dimethacrylate, diethylene glycol dimethacrylate, 1,3-butyleneglycol dimethacrylate, 1,6-hexanediol dimethacrylate, 1,6-hexanediol diacrylate and neopentylglycol diacrylate.

Particularly, in order to enhance workability of the urethane-modified epoxy (meth)acrylate or unsaturated polyester resin and impregnation property of the resin into a fiber tube and to control the viscosity when the monofunctional (meth)acrylate monomer is used, the polyfunctional (meth)acrylate monomer preferably has viscosity of not more than 10mPa·s (at 25°C).

Because the monofunctional (meth)acrylate monomer (b) has higher viscosity than styrene, the resin composition is required to contain the monomer (B) in larger amount than an amount of styrene to maintain workability as a lining material and to form a tube-shaped lining material by impregnating a fiber tube with the composition. The above tendency is strengthened in use of the urethane-modified epoxy (meth)acrylate compared with the unsaturated polyester resin.

The polyfunctional (meth)acrylate monomer has low viscosity compared with the monofunctional (meth)acrylate monomer. Therefore the combined use of the monofunctional (meth)acrylate monomer and polyfunctional (meth)acrylate monomer enables control of the viscosity by the amount added similar to that of styrene, and brings about good photo- and thermal-curing properties.

In case the urethane-modified epoxy (meth)acrylate is used as the component (A), the monofunctional (meth)acrylate monomer as the component (B), which if necessary can contain the polyfunctional (meth)acrylate monomer, is generally used in the range of 20 to 40% by weight based on the total amount of the components (A), (B) and (C). When the monofunctional (meth)acrylate monomer is used in an amount of less than 20% by weight, the resultant curable resin composition shows poor surface drying property by finger, high viscosity and unsatisfactory workability. When the monofunctional (meth)acrylate monomer is used in an amount of more than 40% by weight, the cured product of the resultant curable resin composition generates blisters after hot water impregnation and hence shows poor durability.

In case the unsaturated polyester is used as the component (A), the monofunctional (meth)acrylate monomer as the component (B), which if necessary can contain the polyfunctional (meth)acrylate monomer, is generally used in the range of 30 to 70% by weight (preferably 30 to 50% by weight) based on the total amount of the components (A) and (B). When the monofunctional (meth)acrylate monomer is used in an amount of less than 30% by weight, the resultant curable resin composition shows poor surface drying property by finger, high viscosity and unsatisfactory workability. When the monofunctional (meth)acrylate monomer is used in an amount of more than 70% by weight, the cured product of the resultant curable resin composition generates blisters after hot water impregnation and hence shows poor durability.

The curable resin composition of the invention preferably contains alkoxylated bisphenol A dimethacrylate having alkylene oxide addition molar number of 2 to 20 as the component (C). Use of the alkoxylated bisphenol A dimethacrylate brings about the resultant composition having excellent reactivity, and the resultant cured product shows good weight percentage changes in immersion in water at room and increased temperatures, and excellent affinity and adhesion properties with a tube-shaped fiber. The alkoxylated bisphenol A dimethacrylate is generally an ester compound of alkoxylated bisphenol A (dihydric alcohol) and methacrylic acid. In addition to the alkoxylated bisphenol A, alkoxylated bisphenol F can be employed. The alkylene oxide preferably is propylene oxide or ethylene oxide, especially ethylene oxide.

When the alkylene oxide addition molar number of the component (C) is more than 20, the resultant composition is reduced in reactivity, and hence the resultant cured product comes to have reduced crosslink density, and to increase weight percentage changes in immersion in water at room and raised temperatures and to reduce affinity and adhesion properties with a tube-shaped fiber. Hence, the resultant composition is apt not to be suitable for use in liquid phase. When the alkylene oxide addition molar number of the component (C) is less than 2, the resultant composition is enhanced in viscosity to reduce the workability. The alkoxylated bisphenol A dimethacrylate is, for example, prepared according to the process described in JP07-268079A, i.e., prepared by etherification of ethylene oxide adduct bisphenol A (nuclear containing polyol) and epihalohydrin to form ethylene oxide adduct bisphenol A diglycidyl, and reaction of the bisphenol A diglycidyl and methacrylic acid in the presence of an esterification catalyst.

In case the urethane-modified epoxy (meth)acrylate is used as the component (A), the alkoxylated bisphenol A dimethacrylate of the component (C) is generally used in the range of 10 to 30% by weight based on the total amount of the components (A), (B) and (C). When the curable resin composition contains less than 10% by weight of the alkoxylated bisphenol A dimethacrylate (C), the resultant cured product becomes bleached on its surface after immersion in water at room and raised temperatures. When the composition contains more than 30% by weight of the alkoxylated bisphenol A dimethacrylate (C), the resultant cured product generates blisters on its surface after immersion in water at room and raised temperatures.

In case the unsaturated polyester resin is used as the component (A), the alkoxylated bisphenol A dimethacrylate of the component (C) is generally used in the range of 5 to 20% by weight (especially 5 to 15% by weight) based on the total amount of the components (A), (B) and (C). I.e., the ratio of the components (A):(B):(C) is 30-70:30-70:5-20 ((A)+(B)+(C)=100). When the curable resin composition contains less than 5% by weight of the alkoxylated bisphenol A dimethacrylate (C), the resultant cured product becomes bleached on its surface after immersion in water at room and raised temperatures. When the composition contains more than 20% by weight of the alkoxylated bisphenol A dimethacrylate (C), the resultant cured product generates blisters on its surface after immersion in water at room and raised temperatures.

The curable resin composition containing the unsaturated polyester resin as the component (A) according to the invention generally comprises the aromatic epoxy (meth)acrylate as the component (D) in the range of 10 to 70% by weight (especially 20 to 50% by weight) based on the total amount of the components (A), (B) and (D). I.e., the ratio of the components (A):(B):(D) is 30-70:30-70:10-70 ((A)+(B)+(D)=100). When the curable resin composition contains less than 10% by weight of the aromatic epoxy (meth)acrylate (D), the resultant cured composition shows poor chemical resistance, especially oxidation resistance. When the composition contains more than 70% by weight of the composition (D), the composition is apt to increase the viscosity to show poor homogeneous impregnation property of the composition into a tube-shaped fiber and unsatisfactory workability as a lining material.

The aromatic epoxy (meth)acrylate of the component (D) is generally prepared by reaction of aromatic epoxy resin and (meth)acrylic acid as unsaturated monobasic acid. Examples of the aromatic epoxy resin include novolac system epoxy resins such as phenol novolac system epoxy resin, cresol novolac system epoxy resin and alkyl phenol system epoxy resin; bisphenol system epoxy resins such as bisphenol A series epoxy resin, bisphenol F series epoxy resin and bisphenol S series epoxy resin; resorcin system epoxy resin; N-glycidylamine system epoxy resin; and brominated bisphenol A series epoxy resin.

The epoxy resins can be used singly or in two or more kinds. Between the epoxy resins, the bisphenol A series epoxy resin is preferred because it brings about good balance between a cured lining material (e.g., tube-shaped lining material) and a cured concrete covering material.

The aromatic epoxy (meth)acrylate can be obtained by a conventional reaction of the above aromatic epoxy resin with (meth)acrylic acid as mentioned above.

The unsaturated monobasic acid reacting with the epoxy resin is acrylic acid or methacrylic acid. The other monomers such as crotonic acid, sorbitan acid, cinnamic acid, acrylic acid dimmer, monomethyl maleate, monomethyl fumarate, monocyclohexyl fumarate, and sorbic acid can be used in small amounts together with acrylic acid and/or methacrylic acid. The monomers can be used singly or in two or more kinds. In the photocurable resin composition, acrylic acid is generally used in view of polymerization rate.

In the reaction of the aromatic epoxy resin and (meth)acrylic acid, the molar ratio of the former and the latter is generally in the range of 0.9-1.1 : 1.1-0.9. The reaction is generally carried out at temperature of 80 to 130°C. Examples of esterification catalysts include tertiary amines such as triethyl amine and dimethyl aniline, quaternary ammonium salts such as trimethylbenzyl ammonium chloride, triethylbenzyl ammonium chloride and pyridinium chloride, and inorganic salts such as lithium hydroxide and lithium chloride. If necessary, polymerization inhibitors can be employed. Examples of the polymerization inhibitors include hydroquinones such as hydroquinone and methylhydroquinone, benzoquinones such as benzoquinone and methyl-p-benzoquinone, catecols such as t-butylcatecol, phenols such as 2,6-di-t-butyl-4-methylphenole and 4-methoxyphenole, and phenothiazine.

The curable resin composition containing the unsaturated polyester resin as the component (A) according to the invention can comprise the component (C) and further the aromatic (meth)acrylate as the component (D) in the range of 10 to 70% by weight (especially 20 to 50% by weight) based on the total amount of the components (A), (B), (C) and (D). I.e., the ratio of the components (A):(B):(C):(D) is 30-70:30-70:5-20:10-70 ((A)+(B)+(C)+(D)=100). When the curable resin composition contains less than 10% by weight of the aromatic (meth)acrylate (D), the resultant cured composition shows poor chemical resistance (especially in case of using high concentration nitric acid having high oxidation action). When the composition contains more than 70% by weight of the composition (D), the composition is apt to increase the viscosity to show poor homogeneous impregnation property of the composition into a tube-shaped fiber and unsatisfactory workability as a lining material.

In the invention, the tube-shaped fiber is employed in the tube-shaped lining material. Examples of the tube-shaped fiber include inorganic reinforcing materials such as glass fiber, carbon fiber and metal fiber; or aramid fiber, polyester fiber, vinyl ester fiber, olefin fiber (e.g., polyethylene or polypropylene fiber); known spunbonded nonwoven fabric or melt-flow nonwoven fabric utilizing polyester resin, polyamide resin or aromatic resin; reinforcing materials comprising long needle punch felt of polyester resin, polyamide resin or polypropylene. Glass fiber fabric and felt are generally used as material of the tube-shaped fiber. Process for the preparation of the tube-shaped fiber is described in, for example, JP58-33098A and JP02-221452A.

The curable resin composition of the invention is used as the lining material, and the tube-shaped curable composite made up of the curable resin composition and the tube-shaped fiber is covered with a tube-shaped film (tube). Examples of materials of the tube include known films such as polyurethane rubber film, polyethylene chloride film, polyethylene film, polypropylene film, polyamide film, polyethylene terephthalate film. These materials are described in, for example, JP58-9317C, JP01-15374C and JP04-5020A. However, if a urethane elastomer film (the tube material) comes in contact with styrene of styrene system unsaturated polyester resin or styrene system vinyl ester resin, the film is swollen, deteriorated and softened to generate wrinkles on the surface of the cured composite which inhibit flow of water through a pipe line. Further, when the composite is cured by photopolymerization through light irradiation or by heat polymerization while pressing heated air or heated water into a pipe line, the reaction heat increases temperature of the composite. Hence, when the film of the tube is polyethylene film, polypropylene film or polyethylene chloride film having poor heat resistance, the film softens and melts to stick to the surface of the composite whereby the film is difficultly peeled from the composite. The curable resin composition of the invention contains no styrene or little styrene having high vapor pressure, the contact of a urethane elastomer film having tear propagation strength in the same level as polyamide and high degree of extension with an uncured composite does not bring about swelling, deterioration or softening of the film. Therefore even if only one tube-shaped film (e.g., only urethane elastomer film) is provided on each of inner and outer surfaces, such structure has no problem because of no emission of styrene from the lining material. If a film having high heat resistance such as polyamide film or polyethylene terephthalate film or a urethane elastomer film is used, the film does not soften, deteriorate and melt by temperature rising due to reaction heat of the composite and by heating using heated water or heated air (45-80°C) because of the high heat resistance of the film, whereby wrinkles are not generated on the surface of the cured composite. The cured composite has high tensile strength compared with in use of a polyethylene film.

The thickness of the film of the tube-shaped film (tube) when one film is provided on each of inner and outer surfaces, depending on diameter of the tube-shaped lining material, preferably is at most 300µm in view of heat conductivity of heated water or heated air in heat curing and permeability of ultraviolet rays in photo curing so long as the diameter is 400mm or less. In case the tube-shaped lining material is applied to a pipe line, the lining material is required to have the strength that can withstand the force of peeling the film (tube) from the tube-shaped lining material (curable composite) and the force of pulling the tube-shaped lining material to cover the pipe line. At least one tube-shaped film (tube) holding the curable composite comprising a tube-shaped fabric layer impregnated with the curable resin composition is free from the problems in which two tube-shaped films should be used to hold a tube-shaped fabric layer impregnated with conventional unsaturated polyester resin or vinyl ester resin containing styrene as a copolymerizable monomer. Thus the tube-shaped film (tube) preferably is a tube of a film such as a polyurethane elastomer film, polyamide film, polyethylene terephthalate film or polyester elastomer film due to the above-mentioned reasons. Use of one tube-shaped film (tube) provided on each of inner and outer surfaces brings about sufficient function of holding the curable composite of the invention and the tube-shaped form. However two or three tube-shaped films (tubes) may be used if necessary. Such composites can be prepared by lamination of films or inserting each of films.

An example of an existing pipe line 5 provided with the tube-shaped lining material 1 of the present invention in which the inner and outer surfaces of a tube-shaped fabric layer impregnated with the curable resin composition of the invention are covered with at least one tube-shaped film (tube), is shown in Fig. 1.

The tube-shaped lining material 1 is composed of a tube-shaped fabric layer 3 consisting of a tube-shaped fabric layer (e.g., film of a reinforcing fiber such as glass fiber layer or polyester fiber layer) impregnated with the curable resin composition of the invention, and an inner film 2 and an outer film 4 (e.g., transparent plastic film such as polyurethane film) covering inner and outer surfaces of the tube-shaped fabric layer 3. In the tube-shaped lining material 1 of the invention, the tube-shaped fabric layer 3 is integrated with the inner film 2 and the outer film 4 so as to have good appearance having no wrinkles and high tensile strength. The lining material of the invention comprising the curable resin composition can be advantageously used for the preparation of the tube-shaped lining material.

The tube-shaped lining material of the invention can be prepared by, for example, impregnating the tube-shaped fabric layer with the heat or photo curable resin composition of the invention, and covering with at least one film an inner surface and outer surface of the tube-shaped fabric layer. Examples of the film include as polyurethane film, polyamide film, polyethylene film, and polyester film. The films used in the inner and outer surfaces may be the same as each other or different from each other. The films is required to have flexibility maintaining the flexibility and flexion property of the tube-shaped lining material before curing and not to inhibit the permeability needed for light irradiation.

In a process (apparatus) for covering an inner surface of a pipe with a tube-shaped lining material, for example, the tube-shaped lining material is closely attached into an existing pipe line using pressurized air or water while the tube-shaped lining material is inverted such that the outer side layer of the tube-shaped lining material is changed to the inner side layer, heated water is passed through under pressure (incase of heat-curable resin composition) or connected plural sources of light irradiation are moved inside the pipe line at constant rate with irradiation of UV rays (incase of photocurable resin composition) whereby the tube-shaped lining material is cured, and thus the composite is formed on the inner surface of the pipe line. The radiation time of the source of light irradiation generally is in the range of 0.01 to 1 hour, preferably 0.05 to 0.5 hour, depending on the effective wavelength region of source, output, radiation distance, and a thickness of the tube-shaped lining material. The radiation time of less than 0.01 hour cannot cure the inner resin of the lining material, while the radiation time of more than 1 hour enhances cost.

As photopolymerization initiators used in the curable resin composition of the invention, known photopolymerization initiators for ultraviolet rays and/or photopolymerization initiators for visible light capable of curing a thick layer of curable material can be employed. Representative examples of the photopolymerization initiators for UV include benzoin ether system initiators such as isopropyl benzoin ether, isobutyl benzoin ether, benzoin ethyl ether and benzoin methyl ether; benzylketal system initiators such as hydroxycyclohexylphenylketone and benzylmethylketal; ketonebenzophenone system initiators such as benzyl, methyl-O-benzoinbenzoate, 2-chlorothioxanthone and methylthioxanthone; benzophenone system initiators such as benzophenone/tertiary amine, 2,2-diethoxyacetophenone, α-hydroxyisobutylphenone, acylphosphineoxide, bisacylphosphineoxide and camphorquinone. In the photocurable tube-shaped lining material of the invention, a source of UV irradiation is inserted inside a pipe line and the inside (inner surface) is irradiated with UV, whereby the lining material can be rapidly cured. Photopolymerization initiators having absorption in the range of 250nm (UV wavelength region) to 450nm (visible wavelength region) are preferred. Especially, 2,4,6-trimethylbenzoyldiphenylphosphin and benzylmethylketal are preferred. The initiator can be employed singly or in combination of two or more kinds.

The photopolymerization initiators for visible light are preferably acylphosphineoxide compounds.

Examples of the acylphosphineoxide compounds include bis-(2,6-dichlorobenzoyl)-phenylphosphineoxide, bis-(2,6-dichlorobenzoyl)-2,5-dimcthylphenylphosphincoxidc, bis-(2,6-dichlorobenzoyl)-4-ethoxyphenylphosphineoxide, bis-(2,6-dichlorobenzoyl)-4-propylphenylphosphineoxide, bis-(2,6-dichlorobenzoyl)-2,4,4-trimethylpentylphosphineoxide, and 2,4,6-trimethylbenzoyl-diphenylphosphineoxide. The initiator can be employed singly or in combination of two or more kinds.

The initiator is generally used in the range of 0.01 to 20% by weight based on the total amount of the components (A) and (B), or the components (A), (B), (C) and/or (D) (if (C) and/or (D) is used). The use of less than 0.01 % by weight cannot sufficiently cure the resin composition, while the use of more than 20% by weight does not enhances curing rate.

Examples of organic peroxides used in the heat curable resin composition include ketone peroxides such as methyl ethyl ketone peroxide; hydroperoxides such as cumene hydroperoxide and t-butylhydroperoxide; peroxy esters such as t-butylperoxyoctoate and t-butylperoxybenzoate; dialkylperoxides such as dicumylperoxide; diacylperoxides such as lauloylperoxide and benzoylperoxide.

The organic peroxide is generally used in the range of 0.01 to 10% by weight based on the total amount of the components (A) and (B), or the components (A), (B), (C) and/or (D) (if (C) and/or (D) is used).

In a preferred preparation of the heat curable resin composition of the invention, an aromatic amine system promoter and/or multivalent metal salt and/or complex is added to the resin composition in the amount of 0.01 to 5 weight part based on 100 wegit parts of the resin composition, and subsequently the organic peroxide is added and mixed to form a heat curable resin composition, and then a tube-shaped fiber layer (tube) is impregnated with the resultant heat curable resin composition to prepare a tube-shaped lining material, which is heated. The promoter is effective to promote the curing. The use of less than 0.01% by weight cannot sufficiently cure the resin composition, while the use of more than 5% by weight does not enhances curing rate.

Examples of the aromatic amine system promoters include aniline, N,N-dimethylaniline, N,N-diethylaniline and toluidine, N,N-dimethyl-p-toluidine, and the compounds can be used in one or more kind.

Examples of the multivalent metal salts include multivalent metal salts of naphthenic acid and octenic acid, and examples of the multivalent metal include calcium, copper, manganese, cobalt and vanadium. Especially preferred are cobalt naphthenate and cobalt octenate.

Examples of the complexes include acetylacetone, cobalt acetylacetonate and manganese acetylacetonate.

Further, to the curable resin composition and the lining material advantageously used in the tube-shaped lining material, the following thickeners, paraffin and/or waxes, inorganic aggregate materials and scale-shaped inorganic fillers can be added if necessary.

The curable resin composition of the invention can contain the thickener. Especially the composition comprising unsaturated polyester preferably contain the thickener, whereby the suitable viscosity can be easily controlled. Examples of the thickeners include alkaline metal compounds such as magnesium oxide, magnesium hydroxide, potassium oxide and calcium hydroxide, and sodium alkoxides. Examples of the alkoxides include aluminum isopropilate, methylacetoacetate aluminum butylate, methylethylacetoacetate aluminum dibutylate, propylacetoacetate aluminum diisopropilate, ethylacetoacetate aluminum diethoxyethylate, ethylacetoacetate aluminum diisopropilate and aluminum tris(ethylacetoacctate). Further, tolylene diisocyanate, xylylene diisocyanate, hexamethylene diisocyanate, diphenylmethane diisocyanate can be used singly or in two or more kinds, and can be used together with the alkaline metal compounds.

In the urethane-modified epoxy (meth)acrylate of the invention, the OH-containing hydroxy vinyl ester compound is reacted with the aliphatic and/or cycloaliphatic diisocyanate compound to form urethane bond. However, such urethane bond does not show increased thickening effect as described in EP228922. However, when the thickener is used together with unsaturated polyester resin, acid groups at ends of the polyester are coordinated with the alkaline metal compound (e.g., magnesium oxide) to form an aggregate which brings about thickening effect. Hence the curable resin composition containing the saturated polyester resin containing thickener shows thickening effect.

In the curable resin composition of the invention comprising the urethane-modified epoxy (meth)acrylate of the invention, the composition containing further the unsaturated polyester resin and the thickener has advantages that initial thickening, impregnating viscosity into the tube-shaped fiber layer and final thickening of the prepreg can be controlled. Hence, in case the tube-shaped lining material is inserted into an existing pipe and brought in close contact with the inner surface of the pipe by compressed air or water, the resultant thickening prepreg (lining material) shows no change of thickness (when inserted) and no movement (when inserted) to bring about a tube (inside the pipe) having uniform thickness after curing.

Also, in the curable resin composition of the invention comprising the specific unsaturated polyester resin (A), a monofunctional (meth)acrylate monomer (B) (and, if desired, a polyfunctional monofunctional (meth)acrylate monomer, alkoxylated bisphenol A dimethacrylate (C), and epoxy (meth)acrylate (D)) has advantages that initial thickening, impregnating viscosity into the tube-shaped fiber layer and final viscosity of the prepreg can be controlled. Hence, in case the tube-shaped lining material is inserted into an existing pipe and brought in close contact with the inner surface of the pipe by compressed air or water, the resultant thickening prepreg (lining material) shows no change of thickness (when inserted) and no movement (when inserted) to bring about a tube (inside the pipe) having uniform thickness after curing.

The curable resin composition of the invention may contain the following polymerizable vinyl monomer such as styrene having high vapor pressure by considering the control of emitted amount of styrene according to PRTR system (Pollution Release and Transfer Register), whereby the curable resin composition of the invention corresponds to the composition having extremely reduced amount of polymerizable vinyl monomer.

Examples of the polymerizable vinyl monomers include aromatic vinyl monomers such as styrene, vinyltoluene and α-methylstyrene, methacrylate monomers such as methyl methacrylate, ethyl methacrylate, n-butyl methacrylate, isobutyl methacrylate and 2-ethylhexyl methacrylate. The monomers can be used singly or in two or more kinds. Styrene is generally used. The polymerizable vinyl monomer is generally used in the amount of not more than 30% by weight (content of the polymerizable vinyl monomer is not more than 23% by weight) based on the total amount of the components (A) and (B), or the components (A), (B), (C) and/or (D) (if (C) and/or (D) is used). The conventional vinyl ester resin such as unsaturated polyester resin has the content of the polymerizable vinyl monomer of 40 to 50% by weight, and therefore the composition having small content of the polymerizable vinyl monomer and enabling reduced volatilization volume of the vinyl monomer during working can be employed so as not to deviate from the gist of the invention.

The composition of the invention has excellent drying property per se. However, paraffins and/or waxes can be further used in the composition in order to further enhance drying property.

Examples of the paraffins and/or waxes include paraffins such as paraffin wax and polyethylene wax; higher fatty acids such as stearic acid and 1,2-hydroxystearic acid. Preferred is paraffin wax. The paraffins and/or waxes are added for the purpose of enhancement of air cutoff during curing reaction on a surface of an applied layer and contamination resistance. The content is generally 0.1 to 5% by weight, preferably 0.2 to 2% by weight based on the total amount of the components (A) and (B), or the components (A), (B), (C) and/or (D) (if (C) and/or (D) is used).

Examples of inactive particle-shaped and/or grain-shaped inorganic aggregate materials used in the invention include sand, silica powder, pulverized rock, calcium carbonate, alumina powder, clay, silica stone powder, talc, glass powder, silica powder, aluminum hydroxide, silica sand, aluminum silicate, magnesium silicate and cement.

In case the inactive particle-shaped and/or grain-shaped inorganic aggregate materials are used in the tube-shaped lining material, the inorganic aggregate materials are preferably used in the amount of not more than 30% by weight based on the total amount of the components (A) and (B), or the components (A), (B), (C) and/or (D) (if (C) and/or (D) is used). Use of more than 30% by weight brings about lowering of the impregnating property, increase of heat conductivity and increase of curing time period by heated air or water as heating source. A tube-shaped lining material prepared from a photocurable resin composition containing the inorganic aggregate material shows low transmission of UV. Such photocurable tube-shaped lining material can be only mixed with a small amount of specific fillers. In this case, the fillers are preferably used in the amount of not more than 10% by weight based on the total amount of the components (A) and (B), or the components (A), (B), (C) and/or (D) (if (C) and/or (D) is used).

Further, the curable resin composition of the invention can contain, for example, glass flake or mica flake as the scale-shaped inorganic fillers. The mean particle size of the scale-shaped inorganic filler is generally in the range of 10 to 4,000µm. However, the size is preferably in the range of 100 to 3,000µm in order to maintain impregnation property into a tube-shaped fiber layer and long-tern corrosion proof. The glass flake is preferably used as the scale-shaped inorganic fillers in view of water absorbing stability.

The heat or photo curable resin composition can further contain pigments, antioxidant, flowability adjustor, thixotropic agent, plasticizer, shrinkage inhibitor, antifoamer, colorant, polymerization inhibitor, if necessary.

### [Examples]

The invention is illustrated in detail using the following Examples, which do not restrict the scope of the invention. The word "part(s)" means "part(s) by weight", unless it is particularly indicated.

### [Example 1]

Urethane-modified vinyl ester (epoxy (meth)acrylate) (A),a monofunctional (meth)acrylate monomer (B) and ethoxylated bisphenol A dimethacrylate having ethylene oxide addition molar number of 4.0 (C) were prepared as follows:

### Preparation of Urethane-modified vinyl ester (A)

### <Preparation of hydroxy vinyl ester>

In a four-necked 2L-flask equipped with a stirrer, a condenser, a thermometer and an air introduction tube, 510g of EPIKOTE 828 (available from Japan Epoxy Resin Co., Ltd.) was placed, and heated up to 130°C under stirring while a dried air being blown into the flask at rate of 10L/min. After the attainment of 130°C, 0.3g of hydroquinone (polymerization inhibitor) and 2g of trimethylbenzylammonium chloride were added to the flask, and 144g of acrylic acid was added in drop over two hours. After three hours from the completion of the addition of acrylic acid, an acid value of the reaction mixture was measured every one hour. After the acid value was not more than 10, the reaction mixture was cooled to 100°C to prepare hydroxy vinyl ester (epoxy methacrylate).

### <Preparation of urethane-modified vinyl ester and resin composition>

175G of isophorone diisocyanate and 7g of cobalt naphthenate were added to the resultant hydroxy vinyl ester 828g, and kept at 80°C for 2.5 hours whereby urethanated reaction was carried out. The urethanated product had free isocyanate group content of approx. 0. The resultant urethane-modified epoxy acrylate was cooled to 60°C.

25 Parts of dicyclopentenyloxyethyl acrylate and 20 parts of ethoxylated bisphenol A dimethacrylate having ethylene oxide addition molar number of 4.0 (BPE-200, available from Shin-Nakamura Chemical C., Ltd) were added to 55 parts of the urethane-modified epoxy acrylate, and sufficiently stirred, and then cooled to room temperature to prepare a resin mixture.

Subsequently, other compounds shown in Table 1 were added to the resin mixture and dissolved in the resin mixture to prepare a resin composition (1-1) for photocurable laminated lining material and a resin composition (1-2) for heat curable laminated lining material. The characteristics were evaluated below.

### Photocurable laminated lining material

A laminated sample used for the preparation of photocurable laminated lining material has a size of 1m × 1m.

One part of 2,4,6-trimethylbenzoyldipehnylphosphine oxide (photopolymerization initiator; Lucirin TPO, available from BASF) was sufficiently mixed with 100 parts of the resin mixture while stirring, to prepare the resin composition (1-1) for photocurable laminated lining material.

A roving cloth having a unit weight of 600g/m² (ERW-580-554A, available from Central Glass) was superposed on a urethane elastomer film (790M60K, available from Nippon Valqua Ind.) having thickness of 0.2mm, and impregnated with the resin composition. On the roving cloth impregnated with the resin composition, a chopped strand mat (ECM600-501, available from Central Glass) as an intermediate layer was superposed, and the chopped strand mat was impregnated with the resin composition as in the same manner. Further, on the chopped strand mat impregnated with the resin composition, a roving cloth having a unit weight of 600g/m² (ERW-580-554A, available from Central Glass) was superposed, and impregnated with the resin composition, on which finally a urethane elastomer film (790M60K, available from Nippon Valqua Ind.) having thickness of 0.2mm was covered, to prepare a photocurable laminated lining material (FRP lining material).

The impregnated amount of the resin composition was 4,200g/m² based on the resultant photocurable laminated lining material.

### Heat curable laminated lining material

A heat curable laminated lining material was prepared in the same manner as in the photocurable laminated lining material except for using a resin composition (1-2) for heat curable laminated lining material shown in Table 1.

### [Evaluation method]

### Hardness

### (Photocurable laminated lining material)

A surface of the photocurable laminated lining material is irradiated with UV rays using a UV lamp having 400W at a distance of 15cm for 10 minuets, and then hardness of the surface is measured by Bahcall hardness testing machine (Type: GYXJ934-1). A material having hardness of not less than 50 is evaluated to be good.

### (Heat curable laminated lining material)

The heat curable laminated lining material is allowed to stand at 25°C for 24 hours, and cured at 60°C for 10 hours. The hardness is evaluated as in the same manner as above.

### Peeling property

### (Photocurable laminated lining material)

After irradiation of UV, the surface temperature of the laminated lining material reaches room temperature. Thereafter a fabric adhesive tape for packaging (width: 50mm, length: 250mm) according to JIS Z 1524 is bonded to a surface of the polyurethane elastomer film under pressure, and the tape is peeled from the surface at its end, whereby the peeling force is measured to judge the difficulty of the peeling.

### (Heat curable laminated lining material)

The laminated lining material is allowed to stand at 25°C for 24 hours, and cured at 60°C for 10 hours. Thereafter a fabric adhesive tape for packaging (width: 50mm, length: 250mm) according to JIS Z 1524 is bonded to a surface of the polyurethane elastomer film under pressure, and the tape is peeled from the surface at its end, whereby the peeling force is measured to judge the difficulty of the peeling.

### Tensile strength and Modulus in Tension

Tensile strength and modulus in tension of the cured laminate are measured according to JIS K 7113.

### Flexural Strength and Modulus in Bending

Flexural strength and modulus in bending of the cured laminate are measured according to JIS K 7203.

### Weight Change

10G of the curable resin composition containing a photopolymerization initiator or thermopolymerization initiator is poured (casted) in a glass petri dish having a diameter of 40mm and height of 15mm. The curable resin composition is cured by photopolymerization or thermopolymerization and then demolded. The cast product is immersed in heated water (80°C) for 96 hours, and then weight change of the product is measured.

### Volatilization Volume of styrene

The curable resin composition is sufficiently mixed by stirring, and 100g of the composition is poured in a glass petri dish having a diameter of 145mm, and then stored in an atmosphere of temperature 25°C and humidity 45% for 60 minutes. Thereafter, the composition is mixed and then weight change of the composition is measured.

The above results are shown in Table 1.

**Table 1 Resin composition and FRP Characteristics**

| | | | | Example 1 | |
|---|---|---|---|---|---|
| | Component and Measuring items | | | 1-1 | 1-2 |
| Composition | Urethane-modified epoxy (meth)acrylate | | (parts) | 55 | 55 |
| | Dicyclopentenyloxyethyl acrylate | | (parts) | 25 | 25 |
| | Ethoxylated bisphenol A dimethacrylate | | (parts) | 20 | 20 |
| | | ethylene oxide addition molar number | | 4 | 4 |
| | 2,4,6-Trimethylbenzoyldipehnylphosphine oxide | | (parts) | 1 | |
| | Organic peroxide (benzoyl peroxide) | | (parts) | | 1.2 |
| | 6%-Cobalt naphthenate | | (parts) | | 1.0 |
| | | | | | |
| | Curing property of resin composition | | | good | good |
| | Laminate characteristics | | | | |
| | | Flexural strength | (MPa) | 180 | 185 |
| | | Modulus in bending | (MPa) | 6,500 | 6,200 |
| | | Tensile strength | (MPa) | 90 | 90 |
| | | Modulus in tension | (MPa) | 8,500 | 8,600 |
| | | Thermal deformation temperature | (°C) | 95 | 90 |
| | Peeling property | | | good | good |
| | Weight change in heated water (80°C) | | (%) | 1.2 | 1.1 |
| | Volatilization volume of styrene (g/m²) | | | 0 | 0 |
| | Bahcall hardness | | | 50 | 45 |

### [Example 2]

### <Preparation of resin composition>

30 Parts of dicyclopentenyloxyethyl acrylate (B) and 25 parts of ethoxylated bisphenol A dimethacrylate having ethylene oxide addition molar number of 2.6 (C) (BPE-100N, available from Shin-Nakamura Chemical C., Ltd) were added to 45 parts of the urethane-modified epoxy acrylate (A) prepared in Example 1, and sufficiently mixed to prepare a curable resin mixture.

The resultant curable resin mixture was heated to 60°C, and 50 parts of the following unsaturated polyester and 1.4 part of thickener (magnesium oxide, Magmicron MD-4AM, available from Kyowa Chemical Industry Co., Ltd) were added to into 50 parts of the heated curable resin mixture, and sufficiently mixed while stirring to prepare a unsaturated polyester containing curable resin mixture. Further, one part of 2,4,6-trimethylbenzoyldipehnylphosphine oxide (Lucirin TPO, available from BASF) was sufficiently mixed with 100 parts of the unsaturated polyester containing curable resin mixture while stirring, to prepare a photocurable resin mixture.

### <Preparation of unsaturated polyester>

In a four-necked 2L-flask equipped with a stirrer, a reflux condenser, a thermometer and a nitrogen gas introduction tube, 2 mole (208g) of neopentyl glycol, 3 mole (318g) of diethylene glycol, 2.25 mole (374g) of isophthalic acid and 2.75 mole (319g) of fumaric acid are placed, and reacted with each other at 200°C according to a conventional method to stop the reaction at acid value of 15. Thereafter, the resultant unsaturated polyester was cooled to temperature of 130°C, and 0.015 part of hydroquinone based on 100 parts of the unsaturated polyester was added to the unsaturated polyester to be dissolved at temperature of 60°C. Thereafter the unsaturated polyester was cooled to room temperature to obtain a hydroquinone containing unsaturated polyester.

Subsequently, the hydroquinone containing unsaturated polyester is shown in Table 2 as a resin composition (2-1, 2-2) for photocurable laminated lining material. The characteristics are evaluated below and the results are shown in Table 2.

### Photocurable tube-shaped laminated lining material

Outside a steel mandrel having an outer diameter of 250mm (inner diameter: 240mm) (2-1) or an outer diameter of 300mm (inner diameter: 290mm) (2-2), the same urethane elastomer film as in described in Example 1 was wound in the form of tube, and face-to-face parts of the film were heat sealed with each other to form a tube. Thereafter the tube was impregnated with the resin composition and covered with various layers so as to have the same laminate structure as described in Example 1, and a tube of urethane elastomer film was covered on the surface of the resultant tube, whereby a photocurable tube-shaped laminated lining material was obtained.

The photocurable tube-shaped laminated lining material was inserted into a pipe line of Hume pipe having a coated layer of mold releasing agent on its inner surface such that the lining material was inverted in the pipe line, and then an inner surface of the pipe line are irradiated with UV rays using a UV lamp having 400W at a distance (interval between the inner surface of lining material and UV lamp) of 15cm for 10 minuets, to prepare a cured laminated tube.

The cured laminated tube was peeled from the pipe line, and evaluated for the items of Table 2. The cured laminated tube had an inner diameter of 248mm (2-1), and an inner diameter of 297mm (2-2).

### [Evaluation method]

### Peeling property of inner and outer tubes:

The evaluation is carried out in the same manner as in Example 1.

Line load on 5% flat state and on crush as characteristics of cured laminated tube

The line loads are measured according to Japan Sewage Works Association Standard (JAWAS K-1).

### Test for determining watertight property and destruction water pressure

The test is carried out according to JIS K 6741 (VU tube (rigid polyethylene chloride tube)).

### Viscosity increase over time

Viscosity increase of the resin composition containing the previously mentioned thickener is measured over time.

**Table 2 Tube Characteristics**

| | Component and Measuring items | | | | Example 2 | |
|---|---|---|---|---|---|---|
| | | | | | 2-1 | 2-2 |
| Composition | Urethane-modified epoxy (meth)acrylate | | | (parts) | 22.5 | 22.5 |
| | Dicyclopentenyloxyethyl acrylate | | | (parts) | 15 | 15 |
| | Ethoxylated bisphenol A dimethacrylate | | | (parts) | 12.5 | 12.5 |
| | | ethylene oxide addition molar number | | | 2.6 | 2.6 |
| | Unsaturated polyester | | | (parts) | 50 | 50 |
| | 2,4,6-Trimethylbenzoyldipehnylphosphine oxide | | | (parts) | 1 | 1 |
| | Thickener | | | (parts) | 1.4 | 1.4 |
| | | | | | | |
| | Curing property of resin composition | | | | good | good |
| | Inner diameter | | | (mm) | 248 | 297 |
| | Laminated tube characteristics | | | | | |
| | | Line load on 5% flat state | | (kgf/m) | 640 | 605 |
| | | Line load on crush | | (kgf/m) | 3,750 | 3,650 |
| | | Watertight property | | (15kgf/cm² × 1 min.) | OK | OK |
| | | Destruction water pressure | | (kgf/cm²) | 20 | 20 |
| | | Thermal deformation temperature | | (°C) | 105 | 110 |
| | Peeling property | | | | good | good |
| | Weight change in heated water (80°C) | | | (%) | 1.1 | 1.2 |
| | Volatilization volume of styrene (g/m²) | | | | 0 | 0 |
| | Viscosity increase over time (Pa·s/25°C) | | | | | |
| | | | 5min. | | 2 | |
| | | | 60min. | | 100 | |
| | | | 600min. | | 800 | |
| | | | 3000min. | | 1000 | |

### [Example 3]

The procedures of Example 2 was repeated except for using 15 parts of dicyclopentenyloxyethyl acrylate and 15 parts of neopentyl glycol dimethacrylate (NK Ester NPG, available from Shin-Nakamura Chemical C., Ltd) instead of 30 parts of dicyclopentenyloxyethyl acrylate (B) to prepare a curable resin mixture.

### Photocurable tube-shaped laminated lining material

Outside a steel mandrel having an outer diameter of 200mm (inner diameter: 190mm) (3-1) or an outer diameter of 300mm (inner diameter: 290mm) (3-2), the same urethane elastomer film as in described in Example 1 was wound, and face-to-face parts of the film were heat sealed with each other to form a tube. Thereafter the tube was impregnated with the resin composition and covered with various layers so as to have the same laminate structure as described in Example 1, and a tube of urethane elastomer film was covered on the surface of the resultant tube, whereby a photocurable tube-shaped laminated lining material was obtained.

A cured laminated tube was obtained in the same manner as in Example 2 using the photocurable tube-shaped laminated lining material.

Evaluation of the cured laminated tube was carried out in the same manner as in Example 2, and the results are shown in Table 3.

**Table 3 Tube Characteristics**

| | Component and Measuring items | | | Example 3 | |
|---|---|---|---|---|---|
| | | | | 3-1 | 3-2 |
| Composition | Urethane-modified epoxy (meth)acrylate | | (parts) | 22.5 | 22.5 |
| | Dicyclopentenyloxyethyl acrylate | | (parts) | 7.5 | 7.5 |
| | Neopentyl glycol dimethacrylate | | (parts) | 7.5 | 7.5 |
| | Ethoxylated bisphenol A dimethacrylate | | (parts) | 12.5 | 12.5 |
| | | ethylene oxide addition molar number | | 10 | 10 |
| | Unsaturated polyester | | (parts) | 50 | 50 |
| | 2,4,6-Trimethylbenzoyldipehnylphosphine oxide | | (parts) | 1 | 1 |
| | Thickener | | (parts) | 1.4 | 1.4 |
| | | | | | |
| | Curing property of resin composition | | | good | good |
| | Inner diameter | | (mm) | 198 | 297 |
| | Laminated tube characteristics | | | | |
| | | Line load on 5% flat state | (kgf/m) | 640 | 650 |
| | | Line load on crush | (kgf/m) | 3,750 | 3,900 |
| | | Watertight property | (15kgf/cm² × 1 min.) | OK | OK |
| | | Destruction water pressure | (kgf/cm²) | 20 | 20 |
| | | Thermal deformation temperature | (°C) | 105 | 105 |
| | Peeling property | | | good | good |
| | Weight change in heated water (80°C) | | (%) | 1.1 | 1.1 |
| | Volatilization volume of styrene (g/m²) | | | 0 | 0 |

### [Example 4]

### Photocurable tube-shaped laminated lining material

Outside a steel mandrel having an outer diameter of 200mm (inner diameter: 190mm) or an outer diameter of 300mm (inner diameter: 290mm), the same urethane elastomer film as in described in Example 1 was wound in the form of tube, and face-to-face parts of the film were heat sealed with each other to form a tube. Thereafter the tube was impregnated with the resin composition described in Example 1 and covered with various layers so as to have the same laminate structure as described in Example 1, and a tube of urethane elastomer film was covered on the surface of the resultant tube, whereby a photocurable tube-shaped laminated lining material was obtained.

The photocurable tube-shaped laminated lining material was inserted into a pipe line of Hume pipe having a coated layer of mold releasing agent on its inner surface such that the lining material was inverted in the pipe line, and then an inner surface of the pipe line are irradiated with UV rays using a UV lamp having 400W at a distance (interval between the inner surface of lining material and UV lamp) of 15cm for 10 minuets, to prepare a cured laminated tube.

The cured laminated tube was peeled from the pipe line, and evaluated for the items of Table 4.

### [Evaluation method]

### Peeling property of inner and outer tubes:

The evaluation is carried out in the same manner as in Example 1.

### Line load on 5% flat state and on crush as characteristics of cured laminated tube

The line loads are measured according to Japan Sewage Works Association Standard (JAWAS K-1).

### Test for determining watertight property and destruction water pressure

The test is carried out according to JIS K 6741 (VU tube (rigid polyethylene chloride tube)).

**Table 4 Tube Characteristics**

| Component and Measuring items | | | | Example 4 |
|---|---|---|---|---|
| Composition | Urethane-modified epoxy (methacrylate) | | (parts) | 55 |
| | Dicyclopentenyloxyethyl acrylate | | (parts) | 25 |
| | Ethoxylated bisphenol A dimethacrylate | | (parts) | 20 |
| | ethylene oxide addition molar number | | | 4 |
| | 2, 4, 6-Trimethylbenzoyldiphenylphosphine oxide | | (parts) | 1 |
| | | | | |
| | Curing property of resin composition | | | good |
| | Laminated tube characteristics | | | |
| | | Line load on 5% flat state | (kgf/m) | 600 |
| | | Line load on crush | (kgf/m) | 3,550 |
| | | Watertight property | (15kgf/cm² × 1min.) | OK |
| | | Destruction water pressure | (kgf/cm²) | 21 |
| | | Thermal deformation temperature | (°C) | 100 |
| | Peeling property | | | good |
| | Weight change in heated water (80°C) | | (%) | 1.1 |
| | Volatilization volume of styrene (g/m²) | | | 0 |
| | Bahcall hardness | | | 50 |

### [Example 5]

### <Preparation of resin composition>

35 Parts of dicyclopentenyloxyethyl acrylate (B) and 25 parts of ethoxylated bisphenol A dimethacrylate having ethylene oxide addition molar number of 10 (C) (BPE-500, available from Shin-Nakamura Chemical C., Ltd) were added to 40 parts of the urethane-modified epoxy acrylate (A) prepared in Example 1, and sufficiently mixed to prepare a curable resin mixture.

The curable resin mixture was heated to 60°C, and 50 parts of the unsaturated polyester described in Example 2 and 1.4 part of thickener (magnesium oxide, Magmicron MD-4AM, available from Kyowa Chemical Industry Co., Ltd) were added to into 50 parts of the heated curable resin mixture, and sufficiently mixed while stirring to prepare a unsaturated polyester containing curable resin mixture. Further, 2 part of an organic peroxide (Hardener 328, available from Kayaku Akzo Corporation) was sufficiently mixed with 100 parts of the unsaturated polyester containing curable resin mixture while stirring, to prepare a photocurable resin mixture (heat curable resin composition).

### Heat curable tube-shaped laminated lining material

Outside a steel mandrel having an outer diameter of 250mm (inner diameter: 240mm) or an outer diameter of 300mm (inner diameter: 290mm), the same urethane elastomer film as in described in Example 1 was wound in the form of tube, and face-to-face parts of the film were heat sealed with each other to form a tube. Thereafter the tube was impregnated with the resultant heat curable resin composition and covered with various layers so as to have the same laminate structure as described in Example 1, and a tube of urethane elastomer film was covered on the surface of the resultant tube, whereby a heat curable tube-shaped laminated lining material was obtained.

The heat curable tube-shaped laminated lining material was inserted into a pipe line of Hume pipe having a coated layer of mold releasing agent on its inner surface such that the lining material was inverted in the pipe line, and then heated water was introduced into the pipe line, and the temperatures of the atmosphere and the lining material were heated from 20°C (initial) to 80°C at rising rate of 0.5/min. over two hours. The temperature is kept at 80°C for two hours, and reduced. Thus a cured laminated tube was obtained. The cured laminated tube had an inner diameter of 248mm (5-1), and an inner diameter of 297mm (5-2).

Peeling property of the inner and outer tubes is carried out in the same manner as in Example 1. Line loads on 5% flat state and on crush as characteristics of the cured laminated tube are measured in the same manner as Example 2, and test for determining watertight property and destruction water pressure is carried out in the same manner as Example 2. Weight change in heated water and volatilization volume are evaluated in the same manner as Example 1. The results are shown in Table 5.

**Table 5 Resin composition and Tube Characteristics**

| | Component and Measuring items | | | Example 5 | |
|---|---|---|---|---|---|
| | | | | 5-1 | 5-2 |
| Composition | Urethane-modified epoxy (meth)acrylate | | (parts) | 20 | 20 |
| | Dicyclopentenyloxyethyl acrylate | | (parts) | 17.5 | 17.5 |
| | Ethoxylated bisphenol A dimethacrylate | | (parts) | 12.5 | 12.5 |
| | | ethylene oxide addition molar number | | 10 | 10 |
| | Unsaturated polyester | | (parts) | 50 | 50 |
| | Organic peroxide · Hardener 328 | | (parts) | 2 | 2 |
| | Thickener | | (parts) | 1.4 | 1.4 |
| | | | | | |
| | Curing property of resin composition | | | good | good |
| | Inner diameter | | (mm) | 248 | 297 |
| | | | | | |
| | Laminated tube characteristics | | | | |
| | | Line load on 5% flat state | (kgf/m) | 620 | 635 |
| | | Line load on crush | (kgf/m) | 3,550 | 3,700 |
| | | Watertight property | (15kgf/cm² × 1min.) | OK | OK |
| | | Destruction water pressure | (kgf/cm²) | 20 | 20 |
| | | Thermal deformation temperature | (°C) | 105 | 105 |
| | Peeling property | | | good | good |
| | Weight change in heated water (80°C) | | (%) | 1.2 | 1.2 |
| | Volatilization volume of styrene (g/m²) | | | 0 | 0 |
| | Bahcall hardness | | | 45 | 40 |

### [Example 6]

The procedures of Example 1 was repeated except for using a polyester film having thickness of 0.188mm (Lumilar S10#188, available from Toray) instead of polyurethane elastomer film as the inner and outer films to prepare a photocurable laminated lining material. A cured laminated tube was obtained using the photocurable laminated lining material. The resultant cured laminated tube had an inner diameter of 248mm.

The irradiation location, irradiation dose and irradiation time of UV lamp were carried out in the same manner as in Example 1. The film peeling property, and the hardness and other characteristics of the cured laminate are shown in Table 6.

**Table 6 Resin composition and FRP Characteristics**

| | Component and Measuring items | | | Example 6 |
|---|---|---|---|---|
| Composition | Urethane-modified epoxy (meth)acrylate | | (parts) | 55 |
| | Dicyclopentenyloxyethyl acrylate | | (parts) | 25 |
| | Ethoxylated bisphenol A dimethacrylate | | (parts) | 20 |
| | | ethylene oxide addition molar number | | 4 |
| | 2,4,6-Trimethylbenzoyldipehnylphosphine oxide | | (parts) | 1 |
| | | | | |
| | Curing property of resin composition | | | good |
| | Inner diameter | | (mm) | 248 |
| | | | | |
| | Laminated tube characteristics | | | |
| | | Flexural strength | (MPa) | 155 |
| | | Modulus in bending | (MPa) | 6,000 |
| | | Tensile strength | (MPa) | 85 |
| | | Modulus in tension | (MPa) | 8,800 |
| | | Thermal deformation temperature | (°C) | 105 |
| | Peeling property | | | good |
| | Weight change in heated water (80°C) | | (%) | 1.2 |
| | Volatilization volume of styrene (g/m²) | | | 0 |
| | Bahcall hardness | | | 45 |

### [Comparison Example 1]

The procedures of Example 2 was repeated except for using a mixture consisting of 100 parts of a styrene system vinyl ester and 2 parts of the organic peroxide (Hardener 328, available from Kayaku Akzo Corporation) described in Example 5 as the resin mixture to prepare a cured laminated lining material.

The cured laminated tube was demolded from the pipe line. Peeling properties of the inner and outer tubes are determined in the same manner as in Example 1. Line loads on 5% flat state and on crush as characteristics of cured laminated tube are measured according to Japan Sewage Works Association Standard (JAWAS K-1) described in Example 2, and a test for determining watertight property and destruction water pressure is carried out according to JIS K 6741 (VU tube (rigid polyethylene chloride tube)) described in Example 2.

**Table 7 Tube Characteristics**

| | Component and Measuring items | | | Comparison Example 1 |
|---|---|---|---|---|
| | Styrene system vinyl ester resin | | (parts) | 100 |
| Composition | Organic peroxide · Hardener 328 | | (parts) | 2 |
| | | | | |
| | Curing property of resin composition | | | good |
| | Laminated tube characteristics | | | |
| | | Line load on 5% flat state | (MPa) | 450 |
| | | Line load on crush | (MPa) | 3,300 |
| | | Watertight property | (15kgf/cm² × 1min.) | OK |
| | | Destruction water pressure | (kgf/cm²) | 20 |
| | | Thermal deformation temperature | (°C) | 100 |
| | Peeling property | | | fusion bonding |
| | Weight change in heated water (80°C) | | (%) | 1.1 |
| | Volatilization volume of styrene (g/m²) | | | 80 |
| | Bahcall hardness | | | 45 |

Further volatilization volume of styrene is measured in the same manner as Example 1. As shown in Table 7, the cured laminated tube showed high volatilization volume of 80g/m². Moreover the polyurethane elastomer film was swollen to show lifting and softening.

### [Comparison Example 2]

The procedures of Comparison Example 1 was repeated except for using a polyethylene film having thickness of 0.2mm instead of polyurethane elastomer film as the inner and outer films to prepare a photo cured laminated material. The polyethylene film is difficulty peeled from the cured composite (including no polyethylene film) because the film adheres to the surface of composite.

### [Reference Example 1]

A curable resin composition consisting of the curable resin composition of Example 2 excluding the unsaturated polyester to prepare a photo cured laminated material is prepared. Viscosity increase of the composition over time is shown in Table 8. Viscosity increasing property is scarcely observed.

**Table 8 Tube Characteristics**

| | Component and Measuring items | | | | Reference Example 1 2 |
|---|---|---|---|---|---|
| Composition | Urethane-modified epoxy (meth)acrylate | | | (parts) | 45 |
| | Dicyclopentenyloxyethyl acrylate | | | (parts) | 30 |
| | Ethoxylated bisphenol A dimethacrylate | | | (parts) | 25 |
| | | ethylene oxide addition molar number | | | 2.6 |
| | 2,4,6-Trimethylbonzoyldipehnylphosphine oxide | | | (parts) | 1 |
| | Thickener | | | (parts) | 1.4 |
| | | | | | |
| | Viscosity increase over time (Pa·s/25°C) | | | | |
| | | | 5min. | | 2 |
| | | | 60min. | | 2 |
| | | | 600min. | | 2 |
| | | | 3000min. | | 3 |

As apparent from the results of Tables 1 to 8, a FRP lining material and a tube-shaped lining material prepared from the curable resin composition of the invention show excellent characteristics compared with those of unsaturated polyester system. In more detail, the lining material of unsaturated polyester system shows not only emission of odor but also occurrence of lifting and softening by swelling in case of using a polyurethane elastomer film. Further in case of the lining material of unsaturated polyester system using a polyethylene film, the polyethylene film cannot be peeled from the cured composite because the film adheres to the surface of composite. In addition, the tube prepared from the curable resin composition of the invention also demonstrate excellent characteristics compared with the conventional tube.

### [Example 7]

A curable resin composition comprising unsaturated polyester (A), and dicyclopentenyloxyethyl acrylate (B) were prepared as follows:

### <Preparation of unsaturated polyester>

In a four-necked 2L-flask equipped with a stirrer, a reflux condenser, a thermometer and a nitrogen gas introduction tube, 4 mole (416g) of neopentyl glycol, 1 mole (76g) of propylene glycol, 2 mole (332g) of isophthalic acid and 3 mole (294g) of maleic anhydride are introduced in two steps according to conventional method, and reacted with each other at 200°C to stop the reaction at acid value of 20. Thereafter, the resultant unsaturated polyester was cooled to temperature of 130°C, and 0.015 part of hydroquinone based on 100 parts of the unsaturated polyester was added to the unsaturated polyester to be dissolved at temperature of 60°C. The resultant unsaturated polyester had number average molecular weight of 2,600, molecular weight distribution (M_{w}/Mₙ) of 3.0 and hydroxyl number of 23KOHmg/g.

The number average molecular weight is measured by GPC method (gel permeation chromatography). The molecular weight is polystyrene equivalent. As the measuring equipment, a high-speed GPC equipment (HLC-8120GPC, Tosoh Corp.) and columns (Shodex KF-805, 803, 802, Showa Denko) are used.

### <Preparation of resin composition>

40 Parts of dicyclopentenyloxyethyl acrylate having viscosity of 20mPa·s (25°C) and molecular weight of 248 was added to 60 parts of the resultant unsaturated polyester, and sufficiently mixed, and then cooled to room temperature to prepare a resin mixture.

Subsequently, other compounds shown in Table 9 were added to the resin mixture and dissolved in the resin mixture to prepare a resin composition (7-1) for photocurable laminated lining material and a resin composition (7-2) for heat curable laminated lining material. The characteristics were evaluated below.

### Photocurable laminated lining material

A laminated sample used for the preparation of photocurable laminated lining material has a size of 1m × 1m.

One part of 2,4,6-trimethylbenzoyldipehnylphosphine oxide (photopolymerization initiator; Lucirin TPO, available from BASF) was sufficiently mixed with 100 parts of the resin mixture while stirring, to prepare the resin composition (7-1) for photocurable laminated lining material.

A roving cloth having a unit weight of 600g/m² (ERW-580-554A, available from Central Glass) was superposed on a urethane elastomer film (790M60K, available from Nippon Valqua Ind.) having thickness of 0.2mm, and impregnated with the resin composition. On the roving cloth impregnated with the resin composition, a chopped strand mat (ECM600-501, available from Central Glass) as an intermediate layer was superposed, and the chopped strand mat was impregnated with the resin composition as in the same manner. Further, on the chopped strand mat impregnated with the resin composition, a roving cloth having a unit weight of 600g/m² (ERW-580-554A, available from Central Glass) was superposed, and impregnated with the resin composition, on which finally a urethane elastomer film (790M60K, available from Nippon Valqua Ind.) having thickness of 0.2mm was covered, to prepare a photocurable laminated lining material (FRP lining material).

The impregnated amount of the resin composition was 4,200g/m² based on the resultant photocurable laminated lining material.

### Heat curable laminated lining material

A heat curable laminated lining material was prepared in the same manner as in the photocurable laminated lining material except for using a resin composition (7-2) for heat curable laminated lining material.

### [Evaluation method]

### Hardness

### (Photocurable laminated lining material)

A surface of the photocurable laminated lining material is irradiated with UV rays using a UV lamp having 400W at a distance of 15cm for 5 minuets, and then hardness of the surface is measured by Bahcall hardness testing machine (Type: GYXJ934-1). A material having hardness of not less than 50 is evaluated to be good.

### (Heat curable laminated lining material)

The heat curable laminated lining material is allowed to stand at 25°C for 24 hours, and cured at 60°C for 10 hours. The hardness is evaluated as in the same manner as above.

### Drying time of surface

The composition is coated onto a surface of a glass plate by an applicator at 20°C and a finger-contact test for drying time of a surface of the coated layer is carried out. In the finger-contact test, time period between a time point when the composition is coated and a time point when mark of absorbent cotton having area of 2 to 3cm² is not left on the surface of the coated layer by pressing the absorbent cotton on the surface of the coated layer, is determined.

### Peeling property

### (Photocurable laminated lining material)

After irradiation of UV, the surface temperature of the laminated lining material reaches room temperature. Thereafter a fabric adhesive tape for packaging (width: 50mm, length: 250mm) according to JIS Z 1524 is bonded to a surface of the polyurethane elastomer film under pressure, and the tape is peeled from the surface at its end, whereby the peeling force is measured to judge the difficulty of the peeling.

### (Heat curable laminated lining material)

The laminated lining material is allowed to stand at 25 °C for 24 hours, and cured at 60°C for 10 hours. Thereafter a fabric adhesive tape for packaging (width: 50mm, length: 250mm) according to JIS Z 1524 is bonded to a surface of the polyurethane elastomer film under pressure, and the tape is peeled from the surface at its end, whereby the peeling force is measured to judge the difficulty of the peeling.

### Tensile strength and Modulus in Tension

Tensile strength and modulus in tension of the cured laminate are measured according to JIS K 7113.

### Flexural Strength and Modulus in Bending

Flexural strength and modulus in bending of the cured laminate are measured according to JIS K 7203.

### Weight Change

10G of a curable resin composition containing a photopolymerization initiator or thermopolymerization initiator is poured (casted) in a glass petri dish having a diameter of 40mm and height of 15mm. The curable resin composition is cured by photopolymerization or thermopolymerization and then demolded. The cast product is immersed in heated water (80°C) for 96 hours, and then weight change of the resultant product is measured.

### Volatilization Volume of styrene

The curable resin composition is sufficiently mixed by stirring, and 100g of the composition is poured in a glass petri dish having a diameter of 145mm, and then stored in an atmosphere of temperature 25°C and humidity 45% for 60 minutes. Thereafter, the composition is mixed and then weight change of the composition is measured.

The above results are shown in Table 9.

### [Example 8]

A curable resin composition comprising unsaturated polyester (A), dicyclopentenyloxyethyl acrylate (B) and ethoxylated bisphenol A dimethacrylate having ethylene oxide addition molar number of 4.0 (C) were prepared as follows:

### <Preparation of unsaturated polyester>

In a four-necked 2L-flask equipped with a stirrer, a reflux condenser, a thermometer and a nitrogen gas introduction tube, 3 mole (228g) of propylene glycol, 2 mole (124g) of ethylene glycol, 3 mole (444g) of phthalic anhydride and 2 mole (196g) of maleic anhydride are introduced in two steps according to conventional method, and reacted with each other at 200°C to stop the reaction at acid value of 10. Thereafter, the resultant unsaturated polyester was cooled to temperature of 130°C, and 0.015 part of hydroquinone based on 100 parts of the unsaturated polyester was added to the unsaturated polyester to be dissolved at temperature of 60°C. The resultant unsaturated polyester had number average molecular weight of 3,000 and hydroxyl number of 27KOHmg/g.

### <Preparation of resin composition>

35 Parts of dicyclopentenyloxyethyl acrylate described in Example 7 and ethoxylated bisphenol A dimethacrylate having ethylene oxide addition molar number of 4.0 (BPE-200, available from Shin-Nakamura Chemical C., Ltd) were added to 60 parts of the unsaturated polyester, and sufficiently mixed, and then cooled to room temperature to prepare a resin mixture.

Subsequently, other compounds shown in Table 9 were added to the resin mixture and dissolved in the resin mixture to prepare a resin composition (8-1) for photocurable laminated lining material and a resin composition (8-2) for heat curable laminated lining material. The characteristics were evaluated below.

### Photocurable laminated lining material

A laminated sample used for the preparation of photocurable laminated lining material has a size of 1m × 1m.

One part of 2,4,6-trimethylbenzoyldipehnylphosphine oxide (photopolymerization initiator; Lucirin TPO, available from BASF) was sufficiently mixed with 100 parts of the resin mixture while stirring, to prepare the resin composition (8-1) for photocurable laminated lining material.

A roving cloth having a unit weight of 600g/m² (ERW-580-554A, available from Central Glass) was superposed on a urethane elastomer film (790M60K, available from Nippon Valqua Ind.) having thickness of 0.2mm, and impregnated with the resin composition. On the roving cloth impregnated with the resin composition, a chopped strand mat (ECM600-501, available from Central Glass) as an intermediate layer was superposed, and the chopped strand mat was impregnated with the resin composition as in the same manner. Further, on the chopped strand mat impregnated with the resin composition, a roving cloth having a unit weight of 600g/m² (ERW-580-554A, available from Central Glass) was superposed, and impregnated with the resin composition, on which finally a urethane elastomer film (790M60K, available from Nippon Valqua Ind.) having thickness of 0.2mm was covered, to prepare a photocurable laminated lining material (FRP lining material).

The impregnated amount of the resin composition was 4,200g/m² based on the resultant photocurable laminated lining material.

### Heat curable laminated lining material

A heat curable laminated lining material was prepared in the same manner as in the photocurable laminated lining material except for using a resin composition (8-2) for heat curable laminated lining material.

The characteristics were evaluated in the same manner as in Example 7, and the results were shown in Table 9.

### [Example 9]

A curable resin composition comprising unsaturated polyester (A), dicyclopentenyloxyethyl acrylate (B) and aromatic epoxy acrylate (D) were prepared as follows:

### <Preparation of unsaturated polyester>

In a four-necked 2L-flask equipped with a stirrer, a reflux condenser, a thermometer and a nitrogen gas introduction tube, 4 mole (416g) of neopentyl glycol, 1 mole (76g) of propylene glycol, 2 mole (332g) of isophthalic acid and 3 mole (294g) of maleic anhydride are introduced in two steps according to conventional method, and reacted with each other at 200°C to stop the reaction at acid value of 20. Thereafter, the resultant unsaturated polyester was cooled to temperature of 130°C, and 0.015 part of hydroquinone based on 100 parts of the unsaturated polyester was added to the unsaturated polyester to be dissolved at temperature of 60°C. The resultant unsaturated polyester had number average molecular weight of 2,500 and hydroxyl number of 25KOHmg/g.

### <Preparation of resin composition>

15 Parts of dicyclopentenyloxyethyl acrylate described in Example 7, 15 parts of neopentyl glycol dimethacrylate having viscosity of 5mPa·s (25°C) and molecular weight of 240 and 20 parts of aromatic epoxy acrylate (Epoxy Ester 3000A, available from KYOEISHA Co., Ltd.) were added to 50 parts of the unsaturated polyester, and sufficiently mixed, and then cooled to room temperature to prepare a resin mixture.

Subsequently, other compounds shown in Table 9 were added to the resin mixture and dissolved in the resin mixture to prepare a resin composition (9-1) for photocurable laminated lining material and a resin composition (9-2) for heat curable laminated lining material. The characteristics were evaluated below.

### Photocurable laminated lining material

A laminated sample used for the preparation of photocurable laminated lining material has a size of 1m × 1m.

One part of 2,4,6-trimethylbenzoyldipehnylphosphine oxide (photopolymerization initiator; Lucirin TPO, available from BASF) was sufficiently mixed with 100 parts of the resin mixture while stirring, to prepare the resin composition (9-1) for photocurable laminated lining material.

A roving cloth having a unit weight of 600g/m² (ERW-580-554A, available from Central Glass) was superposed on a urethane elastomer film (790M60K, available from Nippon Valqua Ind.) having thickness of 0.2mm, and impregnated with the resin composition. On the roving cloth impregnated with the resin composition, a chopped strand mat (ECM600-501, available from Central Glass) as an intermediate layer was superposed, and the chopped strand mat was impregnated with the resin composition as in the same manner. Further, on the chopped strand mat impregnated with the resin composition, a roving cloth having a unit weight of 600g/m² (ERW-580-554A, available from Central Glass) was superposed, and impregnated with the resin composition, on which finally a urethane elastomer film (790M60K, available from Nippon Valqua Ind.) having thickness of 0.2mm was covered, to prepare a photocurable laminated lining material (FRP lining material).

The impregnated amount of the resin composition was 4,200g/m² based on the resultant photocurable laminated lining material.

### Heat curable laminated lining material

A heat curable laminated lining material was prepared in the same manner as in the photocurable laminated lining material except for using a resin composition (9-2) for heat curable laminated lining material.

The characteristics were evaluated in the same manner as in Example 7, and the results were shown in Table 9.

### [Example 10]

A curable resin composition comprising unsaturated polyester (A), dicyclopentenyloxyethyl acrylate (B), ethoxylated bisphenol A dimethacrylate having ethylene oxide addition molar number of 10 (C), and aromatic epoxy acrylate (D) were prepared as follows:

### <Preparation of unsaturated polyester>

In a four-necked 2L-flask equipped with a stirrer, a reflux condenser, a thermometer and a nitrogen gas introduction tube, 4 mole (416g) of neopentyl glycol, 1 mole (76g) of propylene glycol, 2 mole (332g) of isophthalic acid and 3 mole (294g) of maleic anhydride are introduced in two steps according to conventional method, and reacted with each other at 200°C to stop the reaction at acid value of 20. Thereafter, the resultant unsaturated polyester was cooled to temperature of 130°C, and 0.015 part of hydroquinone based on 100 parts of the unsaturated polyester was added to the unsaturated polyester to be dissolved at temperature of 60°C. The resultant unsaturated polyester had number average molecular weight of 2,700, molecular weight distribution (M_{w}/Mₙ) of 3.1 and hydroxyl number of 22KOHmg/g.

### <Preparation of resin composition>

17.5 Parts of dicyclopentenyloxyethyl acrylate described in Example 7, 17.5 parts of neopentyl glycol dimethacrylate described in Example 9, 10 parts of ethoxylated bisphenol A dimethacrylate having ethylene oxide addition molar number of 10 (BPE-500, available from Shin-Nakamura Chemical C., Ltd) and 10 parts of aromatic epoxy acrylate (Epoxy Ester 3000A, available from KYOEISHA Co., Ltd.) were added to 40 parts of the unsaturated polyester, and sufficiently mixed, and then cooled to room temperature to prepare a resin mixture.

Subsequently, other compounds shown in Table 9 were added to the resin mixture and dissolved in the resin mixture to prepare a resin composition (10-1) for photocurable laminated lining material and a resin composition (10-2) for heat curable laminated lining material. The characteristics were evaluated below.

### Photocurable laminated lining material

A laminated sample used for the preparation of photocurable laminated lining material has a size of 1m × 1m.

One part of 2,4,6-trimethylbenzoyldipehnylphosphine oxide (photopolymerization initiator; Lucirin TPO, available from BASF) was sufficiently mixed with 100 parts of the resin mixture while stirring, to prepare the resin composition (10-1) for photocurable laminated lining material.

A roving cloth having a unit weight of 600g/m² (ERW-580-554A, available from Central Glass) was superposed on a urethane elastomer film (790M60K, available from Nippon Valqua Ind.) having thickness of 0.2mm, and impregnated with the resin composition. On the roving cloth impregnated with the resin composition, a chopped strand mat (ECM600-501, available from Central Glass) as an intermediate layer was superposed, and the chopped strand mat was impregnated with the resin composition as in the same manner. Further, on the chopped strand mat impregnated with the resin composition, a roving cloth having a unit weight of 600g/m² (ERW-580-554A, available from Central Glass) was superposed, and impregnated with the resin composition, on which finally a urethane elastomer film (790M60K, available from Nippon Valqua Ind.) having thickness of 0.2mm was covered, to prepare a photocurable laminated lining material (FRP lining material).

The impregnated amount of the resin composition was 4,240g/m² based on the resultant photocurable laminated lining material.

### Heat curable laminated lining material

A heat curable laminated lining material was prepared in the same manner as in the photocurable laminated lining material except for using a resin composition (10-2) for heat curable laminated lining material.

The characteristics were evaluated in the same manner as in Example 7, and the results were shown in Table 9.

**Table 9 Resin composition and FRP Characteristics**

| | Component and Measuring items | | | Example 7 | | Example 8 | | Example 9 | | Example 10 | |
|---|---|---|---|---|---|---|---|---|---|---|---|
| | | | | 7-1 | 7-2 | 8-1 | 8-2 | 9-1 | 9-2 | 10-1 | 10-2 |
| Composition | Unsaturated polyester | | (parts) | 60 | 60 | 55 | 55 | 50 | 50 | 40 | 40 |
| | Dicyclopentenyloxyethyl methacrylate | | (parts) | | | | | 15 | 15 | 17.5 | 17.5 |
| | Dicyclopentenyloxyethyl acrylate | | (parts) | 40 | 40 | 35 | 35 | | | | |
| | Neopentyl glycol dimethacrylate | | (parts) | | | | | 15 | 15 | 17.5 | 17.5 |
| | Ethoxylated bisphenol A dimethacrylate | | (parts) | | | 10 | 10 | | | 10 | 10 |
| | | ethylene oxide addition molar number | | | | 4.0 | 4.0 | | | 10 | 10 |
| | Epoxy acrylate | | (parts) | | | | | 20 | 20 | 10 | 10 |
| | 2,4,6-Trimethylbenzoyldipehnylphosphine oxide | | (parts) | 1 | | 1 | | 1 | | 1 | |
| | Organic peroxide 328 | | (parts) | | 1.5 | | 1.5 | | 1.5 | | 1.5 |
| | | | | | | | | | | | |
| | Curing property of resin composition | | | good | good | good | good | good | good | good | good |
| | Drying time of surface | | (min.) | 10 | 120 | 10 | 120 | 10 | 120 | 10 | 180 |
| | Laminate characteristics | | | | | | | | | | |
| | | Flexural strength | (MPa) | 170 | 184 | 174 | 154 | 165 | 174 | 180 | 165 |
| | | Modulus in bending | (MPa) | 6,500 | 6,800 | 6,000 | 6,144 | 6,200 | 6,500 | 6,050 | 6,100 |
| | | Tensile strength | (MPa) | 75 | 70 | 70 | 65 | 70 | 75 | 65 | 65 |
| | | Modulus in tension | (MPa) | 8,600 | 8,200 | 8,140 | 6,500 | 7,140 | 7,000 | 6,800 | 6,200 |
| | | Degree of elongation | (%) | 1.4 | 1.1 | 1.4 | 1.5 | 1.4 | 1.4 | 1.2 | 1.2 |
| | | Thermal deformation temperature | (°C) | 95 | 95 | 95 | 85 | 90 | 90 | 95 | 90 |
| | Weight change in heated water (80°C) | | (%) | 1.2 | 1.2 | 1.2 | 1.9 | 1.6 | 1.8 | 1.8 | 1.9 |
| | Peeling property | | | good | good | good | good | good | good | good | good |
| | Volatilization volume of styrene (g/m²) | | | 0 | 0 | 0 | 0 | 0 | 0 | 0 | 0 |

### [Example 11]

1.4 Part of a thickener (magnesium oxide, Magmicron MD-4AM, available from Kyowa Chemical Industry Co., Ltd) and one part of 2,4,6-trimethylbenzoyldipehnylphosphine oxide (photopolymerization initiator; Lucirin TPO, available from BASF) were added to 100 parts of each of the resin compositions described in Examples 7 to 10 to prepare four curable resin compositions containing photopolymerization initiator.

The resultant curable resin compositions containing photopolymerization initiator are shown in Table 10 as resin compositions (11-1 to 11-8) for photocurable laminated lining material.

The characteristics of photocurable laminated lining material prepared from the compositions were evaluated below, and the results were shown in Table 10.

### Photocurable tube-shaped laminated lining material

Outside a steel mandrel having an outer diameter of 250mm (inner diameter: 240mm) (11-1, 3, 5, 7) or an outer diameter of 300mm (inner diameter: 290mm) (11-2, 4, 6, 8), the same urethane elastomer film as in described in Example 7 was wound, and face-to-face parts of the film were heat sealed with each other to form a tube. Thereafter the tube was impregnated with the resin composition and covered with various layers so as to have the same laminate structure as described in Example 7, and a tube of urethane elastomer film was covered on the surface of the resultant tube, whereby a photocurable tube-shaped laminated lining material was obtained.

The photocurable tube-shaped laminated lining material was inserted into a pipe line of Hume pipe having a coated layer of mold releasing agent on its inner surface such that the lining material was inverted in the pipe line, and then an inner surface of the pipe line are irradiated with UV rays using a UV lamp having 400W at a distance (interval between the inner surface of lining material and UV lamp) of 5cm for 10 minuets, to prepare a cured laminated tube.

The cured laminated tube was demolded from the pipe line, and evaluated for the items of Table 10. The cured laminated tubes had an inner diameter of 248mm (in case of 11-1, 3, 5, 7), and an inner diameter of 297mm (in case of 11-2, 4, 6, 8).

### [Evaluation method]

### Peeling property of inner and outer tubes:

The evaluation is carried out in the same manner as in Example 7.

### Line load on 5% flat state and on crush as characteristics of cured laminated tube

The line loads are measured according to Japan Sewage Works Association Standard (JAWAS K-1).

### Test for determining watertight property and destruction water pressure

The test is carried out according to JIS K 6741 (VU tube (rigid polyethylene chloride tube).

### Viscosity increase over time

Viscosity increase of the resin composition containing the thickener is measured over time.

**Table 10 Tube Characteristics**

| | | | | | Example 11 | | | | | | | |
|---|---|---|---|---|---|---|---|---|---|---|---|---|
| | Component and Measuring items | | | | 11-1 | 11-2 | 11-3 | 11-4 | 11-5 | 11-6 | 11-7 | 11-8 |
| Composition | Unsaturated polyester | | | (parts) | 60 | 60 | 55 | 55 | 50 | 50 | 40 | 40 |
| | Dicyclopentenyloxyethyl methacrylate | | | (parts) | | | | | 15 | 15 | 17.5 | 17.5 |
| | Dicyclopentenyloxyethyl acrylate | | | (parts) | 40 | 40 | 35 | 35 | | | | |
| | Neopentyl glycol dimethacrylate | | | (parts) | | | | | 15 | 15 | 17.5 | 17.5 |
| | Ethoxylated bisphenol A dimethacrylate | | | (parts) | | | 10 | 10 | | | 10 | 10 |
| | | ethylene oxide addition molar number | | | | | 4.0 | 4.0 | | | 10 | 10 |
| | Epoxy acrylate | | | (parts) | | | | | 20 | 20 | 10 | 10 |
| | 2,4,6-Trimethylbenzoyldipehnylphosphine oxide | | | (parts) | 1 | 1 | 1 | 1 | 1 | 1 | 1 | 1 |
| | Thickener | | | (parts) | 1.4 | 1.4 | 1.4 | 1.4 | 1.4 | 1.4 | 1.4 | 1.4 |
| | Inner diameter | | | (mm) | 248 | 298 | 248 | 298 | 248 | 298 | 248 | 298 |
| | Laminated tube characteristics | | | | | | | | | | | |
| | | Line load on 5% flat state | | (kgf/m) | 600 | 590 | 610 | 585 | 650 | 620 | 620 | 600 |
| | | Line load on crush | | (kgf/m) | 3,500 | 4,100 | 3,350 | 3,850 | 3,200 | 3,750 | 3,800 | 4,000 |
| | | Watertight property | | (15kgf/cm² × 1min.) | OK | OK | OK | OK | OK | OK | OK | OK |
| | | Destruction water pressure | | (kgf/cm²) | 20 | 20 | 20 | 20 | 20 | 20 | 20 | 20 |
| | Viscosity increase over time (Pa·s/25°C) | | | | | | | | | | | |
| | | | 5min. | | 3 | | 3.5 | | 2 | | 1.5 | |
| | | | 60min. | | 150 | | 170 | | 180 | | 135 | |
| | | | 600min. | | 1100 | | 1000 | | 990 | | 900 | |
| | | | 3000min. | | 1500 | | 1250 | | 1300 | | 1200 | |

### [Example 12]

1.4 Part of a thickener (magnesium oxide, Magmicron MD-4AM, available from Kyowa Chemical Industry Co., Ltd) and 1.5 part of organic peroxide (Hardener 328, available from Kayaku Akzo Corporation) were added to 100 parts of each of the resin compositions described in Examples 7 to 10 to prepare four curable resin compositions containing photopolymerization initiator.

The resultant curable resin compositions containing photopolymerization initiator are shown in Table 11 as resin compositions (12-1 to 12-8) for heat curable laminated lining material.

The characteristics of photocurable laminated lining material prepared from the compositions were evaluated below, and the results were shown in Table 11.

### Heat curable tube-shaped laminated lining material

Outside a steel mandrel having an outer diameter of 250mm (inner diameter: 240mm) (12-1, 3, 5, 7) or an outer diameter of 300mm (inner diameter: 290mm) (12-2, 4, 6, 8), the same urethane elastomer film as in described in Example 1 was wound in the form of tube in the same manner as in Example 11, and face-to-face parts of the film were heat sealed with each other to form a tube. Thereafter the tube was impregnated with the resultant heat curable resin composition and covered with various layers so as to have the same laminate structure as described in Example 7, and a tube of urethane elastomer film was covered on the surface of the resultant tube, whereby a heat curable tube-shaped laminated lining material was obtained.

The heat curable tube-shaped laminated lining material was inserted into a pipe line of Hume pipe having a coated layer of mold releasing agent on its inner surface such that the lining material was inverted in the pipe line, and then heated water was introduced into the pipe line, whereby the temperatures of the atmosphere and the lining material were heated from 20°C (initial) to 80°C at rising rate of 0.5/min. over two hours and the temperatures were kept at 80°C for two hours, and reduced. Thus a cured laminated tube was obtained.

The cured laminated tube is demolded from the pipe line, and line load on 5% flat state and on crush as characteristics of cured laminated tube is measured in the same manner as Example 11, and test for determining watertight property and destruction water pressure is carried out in the same manner as Example 11. The results are shown in Table 11, The cured laminated tubes had an inner diameter of 198mm (12-1, 3, 5, 7), and an inner diameter of 298mm (12-2, 4, 6, 8).

**Table 11 Tube Characteristics**

| | | | | | Example 12 | | | | | | | |
|---|---|---|---|---|---|---|---|---|---|---|---|---|
| | Component and Measuring items | | | | 12-1 | 12-2 | 12-3 | 12-4 | 12-5 | 12-6 | 12-7 | 12-8 |
| Composition | Unsaturated polyester | | | (parts) | 60 | 60 | 55 | 55 | 50 | 50 | 40 | 40 |
| | Dicyclopentenyloxyethyl methacrylate | | | (parts) | | | | | 15 | 15 | 17.5 | 17.5 |
| | Dicyclopentenyloxyethyl acrylate | | | (parts) | 40 | 40 | 35 | 35 | | | | |
| | Neopentyl glycol dimethacrylate | | | (parts) | | | | | 15 | 15 | 17.5 | 17.5 |
| | Ethoxylated bisphenol A dimethacrylate | | | (parts) | | | 10 | 10 | | | 10 | 10 |
| | ethylene oxide addition molar number | | | | | | 4.0 | 4.0 | | | 10 | 10 |
| | Epoxy acrylate | | | (parts) | | | | | 20 | 20 | 10 | 10 |
| | Organic peroxide 328 | | | (parts) | 1.5 | 1.5 | 1.5 | 1.5 | 1.5 | 1.5 | 1.5 | 1.5 |
| | Thickener | | | (parts) | 1.4 | 1.4 | 1.4 | 1.4 | 1.4 | 1.4 | 1.4 | 1.4 |
| | Inner diameter | | | (mm) | 198 | 298 | 198 | 298 | 198 | 298 | 198 | 298 |
| | Laminated tube characteristics | | | | | | | | | | | |
| | | Line load on 5% flat state | | (kgf/m) | 500 | 590 | 540 | 620 | 540 | 600 | 540 | 610 |
| | | Line load on crush | | (kgf/m) | 3,300 | 4,000 | 3,300 | 3,800 | 3,300 | 3,700 | 3,500 | 3,900 |
| | | Watertight property | | (15kgf/cm² × 1min.) | OK | OK | OK | OK | OK | OK | OK | OK |
| | | Destruction water pressure | | (kgf/cm²) | 20 | 20 | 20 | 20 | 20 | 20 | 20 | 20 |
| | Viscosity increase over time (Pa·s/25°C) | | | | | | | | | | | |
| | | | 5min. | | 3 | | 3.5 | | 2 | | 1.5 | |
| | | | 60min. | | 140 | | 150 | | 170 | | 130 | |
| | | | 600min. | | 1200 | | 1000 | | 1100 | | 950 | |
| | | | 3000min. | | 1400 | | 1250 | | 1350 | | 1200 | |

### [Example 13]

The procedures of Example 7 (7-1) was repeated except for using a polyester film having thickness of 0.188mm (Lumilar S10#188, available from Toray) instead of polyurethane elastomer film as the inner and outer films to prepare a photocurable laminated lining material.

A cured laminated tube was obtained by using the photocurable laminated lining material. The irradiation location, irradiation dose, and irradiation time of UV lamp were carried out in the same manner as in Example 7. The film peeling property and the hardness and other characteristics of the cured laminate are shown in Table 12.

**Table 12 Resin composition and FRP Characteristics**

| | | | | Example 13 |
|---|---|---|---|---|
| | Component and Measuring items | | | |
| Composition | Unsaturated polyester | | (parts) | 60 |
| | Dicyclopentenyloxyethyl acrylate | | (parts) | 40 |
| | 2,4,6-Trimethylbenzoyldipehnylphosphine oxide | | (parts) | 1 |
| | | | | |
| | Curing property of resin composition | | | good |
| | Laminate characteristics | | | |
| | | Flexural strength | (MPa) | 180 |
| | | Modulus in bending | (MPa) | 5,800 |
| | | Tensile strength | (MPa) | 90 |
| | | Modulus in tension | (MPa) | 8,900 |
| | Peeling property | | | good |
| | Bahcall hardness | | | 50 |

### [Comparison Example 3]

The procedures of Example 12 was repeated except for using a mixture consisting of 100 parts of a styrene system vinyl ester and 2 parts of the organic peroxide (Hardener 328, available from Kayaku Akzo Corporation) described in Example 12 as the resin mixture to prepare a cured laminated lining material.

The cured laminated tube was demolded from the pipe line. Peeling properties of inner and outer tubes are determined in the same manner as in Example 7. Line loads on 5% flat state and on crush as characteristics of cured laminated tube are measured according to Japan Sewage Works Association Standard (JAWAS K-1) described in Example 11, and a test for determining watertight property and destruction water pressure is carried out and JIS K 6741 (VU tube (rigid polyethylene chloride tube) described in Example 11.

**Table 13 Tube Characteristics**

| | | | | Comparison Example 3 | |
|---|---|---|---|---|---|
| | Component and Measuring items | | | 14-1 | 14-2 |
| Composition | Styrene system vinyl ester resin | | (parts) | 100 | 100 |
| | Organic peroxide Hardener 328 | | (parts) | 2 | 2 |
| | | | | | |
| | Curing property of resin composition | | | good | good |
| | Inner diameter | | (mm) | 248 | 298 |
| | Laminated tube characteristics | | | | |
| | | Line load on 5% flat state | (MPa) | 510 | 620 |
| | | Line load on crush | (MPa) | 3,300 | |
| | | Watertight property | (15kgf/cm² × 1min.) | OK | OK |
| | | Destruction water pressure | (kgf/cm²) | 20 | 20 |
| | | Thermal deformation temperature | (°C) | 100 | 105 |
| | Peeling property | | | fusion bonding | fusion bonding |
| | Weight change in heated water (80°C) | | (%) | 12 | 1.3 |
| | Volatilization volume of styrene (g/m²) | | | 80 | 82 |
| | Bahcall hardness | | | 45 | 45 |

Further volatilization volume is evaluated in the same manner as Example 7. As shown in Table 13, the cured laminated tube showed high volatilization volume of 80g/m². Moreover the polyurethane elastomer film was swollen to show lifting and softening.

### [Comparison Example 4]

The procedures of Comparison Example 3 was repeated except for using a polyethylene film having thickness of 0.2mm instead of polyurethane elastomer film as the inner and outer films to prepare a photo cured laminated material. The polyethylene film is difficultly peeled from the cured composite (including no polyethylene film) because the film adheres to the surface of composite.

### [Reference Example 2]

A curable resin composition consisting of the curable resin composition of Example 8 excluding the unsaturated polyester to prepare a photo cured laminated material is prepared. Viscosity increase of the composition over time is shown in Table 14. Viscosity increasing property is scarcely observed.

**Table 14 Characteristics of viscosity increase**

| | Component and Measuring items | | | | Reference Example 2 |
|---|---|---|---|---|---|
| Composition | Unsaturated polyester | | | (parts) | |
| | Dicyclopentenyloxyethyl acrylate | | | (parts) | 29 |
| | Neopentyl glycol dimethacrylate | | | (parts) | 29 |
| | Ethoxylated bisphenol A dimethacrylate | | | (parts) | 17 |
| | | ethylene oxide addition molar number | | | 10 |
| | Epoxy acrylate | | | (parts) | 25 |
| | 2,4,6-Trimethylbenzoyldipehnylphosphine oxide | | | (parts) | 1 |
| | Thickener | | | (parts) | 1.4 |
| | | | | | |
| | Viscosity increase over time (Pa·s/25°C) | | | | |
| | | | 5min. | | 2 |
| | | | 60min. | | 3 |
| | | | 600min. | | 4 |
| | | | 3000min. | | 4 |

As apparent from the results of Tables 9 to 14, a FRP lining material and a tube-shaped lining material prepared from the curable resin composition of the invention show excellent characteristics compared with those of unsaturated polyester system. In more detail, the lining material of unsaturated polyester system shows not only emission of odor but also occurrence of lifting and softening by swelling in case of using a polyurethane elastomer film. Further in case of the lining material of unsaturated polyester system using a polyethylene film, the polyethylene film cannot be peeled from the cured composite because the film adheres to the surface of composite. In addition, the tube prepared from the curable resin composition of the invention also demonstrate the excellent characteristics compared with the conventional tube.

## Claims

1. A curable resin composition comprising:
(A) urethane-modified epoxy (meth)acrylate having a (meth)acryloyl group obtained by the reaction of an OH-containing hydroxy vinyl ester compound derived from aromatic epoxy resin and (meth)acrylic acid with an aliphatic and/or cycloaliphatic diisocyanate compound, or
unsaturated polyester having number average molecular weight of 500 to 4,000; and
(B) a monofunctional (meth)acrylate monomer containing as alcohol residue a cyclic hydrocarbon group having one carbon-carbon double bond or one nitrogen atom in the cycle.

2. A curable resin composition as defined in claim 1, further comprising (C) alkoxylated bisphenol A dimethacrylate having alkylene oxide addition molar number of 2 to 20.

3. A curable resin composition as defined in claim 1 comprising:
(A) 20 to 60% by weight of urethane-modified epoxy (meth)acrylate having a (meth)acryloyl group obtained by the reaction of an OH-containing hydroxy vinyl ester compound derived from aromatic epoxy resin and (meth)acrylic acid with an aliphatic and/or cycloaliphatic diisocyanate compound;
(B) 20 to 40% by weight of a monofunctional (meth)acrylate monomer containing as alcohol residue a cyclic hydrocarbon group having one carbon-carbon double bond or one nitrogen atom in the cycle; and
(C) 20 to 40% by weight of alkoxylated bisphenol A dimethacrylate having alkylene oxide addition molar number of 2 to 20;
the total percents of (A) to (C) being 100%.

4. A curable resin composition as defined in claim 1 comprising:
(A) 30 to 70% by weight of unsaturated polyester having number average molecular weight of 500 to 4,000; and
(B) 30 to 70% by weight of a monofunctional (meth)acrylate monomer containing as alcohol residue a cyclic hydrocarbon group having one carbon-carbon double bond or one nitrogen atom in the cycle;
the total percents of (A) and (B) being 100%.

5. A curable resin composition as defined in claim 1 comprising:
(A) 30 to 70% by weight of unsaturated polyester having number average molecular weight of 500 to 4,000;
(B) 30 to 70% by weight of monofunctional (meth)acrylate monomer containing as alcohol residue a cyclic hydrocarbon group having one carbon-carbon double bond or one nitrogen atom in the cycle; and
(C) 5 to 20% by weight of alkoxylated bisphenol A dimethacrylate having alkylene oxide addition molar number of 2 to 20;
the total percents of (A) to (C) being 100%.

6. A curable resin composition as defined in claim 1 comprising:
(A) 30 to 70% by weight of unsaturated polyester having number average molecular weight of 500 to 4,000;
(B) 30 to 70% by weight of a monofunctional (meth)acrylate monomer containing as alcohol residue a cyclic hydrocarbon group having one carbon-carbon double bond or one nitrogen atom in the cycle; and
(D) 10 to 70% by weight of epoxy (meth)acrylate derived from aromatic epoxy resin and (meth)acrylic acid;
the total percents of (A), (B) and (D) being 100%.

7. A curable resin composition as defined in claim 1 comprising:
(A) 30 to 70% by weight of unsaturated polyester having number average molecular weight of 500 to 4,000;
(B) 30 to 70% by weight of a monofunctional (meth)acrylate monomer containing as alcohol residue a cyclic hydrocarbon group having one carbon-carbon double bond or one nitrogen atom in the cycle;
(C) 5 to 20% by weight of alkoxylated bisphenol A dimethacrylate having alkylene oxide addition molar number of 2 to 20; and
(D) 10 to 70% by weight of epoxy (meth)acrylate derived from aromatic epoxy resin and (meth)acrylic acid;
the total percents of (A) to (D) being 100%.

8. A curable resin composition as defined in any of claims 1 to 7, comprising, instead of a part of the component (B), at least one polyfunctional (meth)acrylate monomer selected from neopentylglycol dimethacrylate, trimethylolpropane trimethacrylate, ethylene glycol dimethacrylate, diethylene glycol dimethacrylate, 1,3-butyleneglycol dimethacrylate, 1,6-hexanediol dimethacrylate, 1,6-hexanediol diacrylate and neopentylglycol diacrylate.

9. A lining material comprising the curable resin composition as defined in any of claims 1 to 8.

10. A tube-shaped lining material comprising a tube-shaped curable composite comprising a tube-shaped fabric layer impregnated with a photocurable resin composition comprising the curable resin composition as defined in any of claims 1 to 7 and a photopolymerization initiator, and at least one tube-shaped film covering inner and/or outer surface(s) of the tube-shaped fabric layer.

11. A tube-shaped lining material comprising a tube-shaped curable composite comprising a tube-shaped fabric layer impregnated with a heat curable resin composition comprising the curable resin composition as defined in any of claims 1 to 7 and a thermopolymerization initiator, and at least one tube-shaped film covering inner and/or outer surface(s) of the tube-shaped fabric layer.

12. A tube-shaped lining material comprising 30 to 90% by weight of the curable resin composition as defined in any of claims 1 to 3, and 10 to 70% by weight of unsaturated polyester containing 0.5 to 10% by weight of a thickener.

13. A tube-shaped lining material comprising 30 to 90% by weight of the curable resin composition as defined in claim 3, and 10 to 70% by weight of unsaturated polyester containing 0.5 to 10% by weight of a thickener.

14. A tube-shaped lining material comprising a tube-shaped curable composite comprising a tube-shaped fabric layer impregnated with a photocurable resin composition comprising the curable resin composition as defined in claim 13 or 14, and at least one tube-shaped film covering inner and/or outer surface(s) of the tube-shaped fabric layer.

15. A lining material comprising the curable resin composition as defined in claim 1 or 4, further containing 0.5 to 10% by weight of a thickener based on the total amount of the curable resin composition.
